# EUROPÄISCHE PATENTSCHRIFT

(11) **EP 1 899 359 B1**
(45) Veröffentlichungstag und Bekanntmachung des Hinweises auf die Patenterteilung: **02.09.2009**
(21) Anmeldenummer: 06763686.0
(22) Anmeldetag: 13.06.2006
(51) Int. Cl.: C07F 15/00

(54) **VERFAHREN ZUR ISOMERISIERUNG CYCLOMETALLIERTER, CARBENLIGANDEN ENTHALTENDER ÜBERGANGSMETALLKOMPLEXE**
METHOD FOR THE ISOMERISATION OF TRANSITION METAL COMPLEXES CONTAINING CYCLOMETALLATED, CARBENE LIGANDS
PROCEDE POUR ISOMERISER DES COMPLEXES DE METAUX DE TRANSITION CYCLOMETALLISES CONTENANT DES LIGANDS CARBENE

(30) Priorität: 14.06.2005 DE 102005027548
(43) Veröffentlichungstag der Anmeldung: 19.03.2008
(73) Patentinhaber: BASF SE, 67056 Ludwigshafen (DE)
(72) Erfinder: MOLT, Oliver, 69493 Hirschberg (DE); KAHLE, Klaus, 67069 Ludwigshafen (DE)
(86) Internationale Anmeldenummer: PCT/EP2006/063165
(87) Internationale Veröffentlichungsnummer: WO 2006/134113

(56) Entgegenhaltungen:
- WO-A-20/05019373
- DE-A1-102004 057 072
- US-A1- 2002 121 638
- TAMAYO A B ET AL: "SYNTHESIS AND CHARACTERIZATION OF FACIAL AND MERIDIONAL TRIS-CYCLOMETALATED IRIDIUM(III) COMPLEXES" JOURNAL OF THE AMERICAN CHEMICAL SOCIETY, AMERICAN CHEMICAL SOCIETY, WASHINGTON, DC, US, Bd. 125, 2003, Seiten 7377-7387, XP001197163 ISSN: 0002-7863

## Beschreibung

Die vorliegende Erfindung betrifft ein Verfahren zur Überführung einer isomerenreinen Verbindung V¹ der Formel I 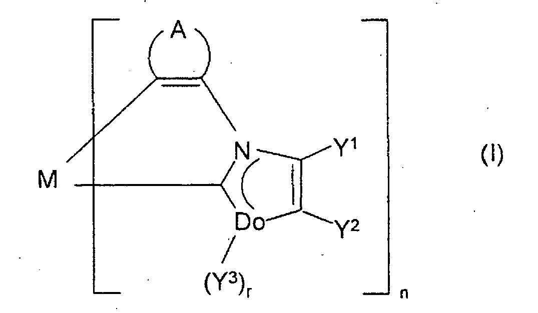 oder einer Mischung M¹, welche V¹ enthält, in eine von V¹ verschiedene isomere Verbindung V² der Formel I oder eine Mischung M², welche V² enthält, wobei die Variablen die folgenden Bedeutungen aufweisen:
- n: 2 oder 3;
- M: für n gleich 2: Pd oder Pt jeweils in der formalen Oxidationsstufe +II; für n gleich 3: Ru, Os, Co, Rh oder Ir jeweils in der formalen Oxidationsstufe +III;
- Do: Donoratom ausgewählt aus der Gruppe bestehend aus N, O, S und P;
- r: gleich 1, wenn Do N oder P ist, und 0, wenn Do O oder S ist;
- Y¹, Y²: jeweils unabhängig voneinander Wasserstoff, Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ oder NO,
oder
- Y¹ und Y²: bilden zusammen mit den Kohlenstoffatomen, an welche sie gebunden sind, einen sechsgliedrigen aromatischen Ring, weicher ein oder zwei Stickstoffatome enthalten kann, und gegebenenfalls mit einem weiteren, gegebenenfalls anellierten und gegebenenfalls Heteroatome enthaltenden Ring anelliert ist;
- Y³: Alkyl, Alkenyl, Alkinyl, Aryl oder Heteroaryl;
- A: eine Brücke mit drei oder vier Atomen, wovon ein oder zwei Atome Heteroatome sein können und die restlichen Atome Kohlenstoffatome sind, so dass die Gruppe 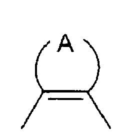 einen fünf- oder sechsgliedrigen heteroaromatischen Ring oder Benzolring bildet, der gegebenenfalls mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert und gegebenenfalls mit einem weiteren, gegebenenfalls Heteroatome enthaltenden Ring anelliert ist, welcher, ebenfalls anelliert und mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert sein kann;
welches dadurch gekennzeichnet ist, dass man eine Brönsted-Säure oder ein Gemisch von Brönsted-Säuren auf V¹ oder M¹ in Gegenwart eines Lösungsmittels oder Lösungsmittelgemisches bei einer Temperatur von 0°C bis zum Siedepunkt des Lösungsmittels oder des Lösungsmittelgemisches einwirken lässt, mit der Maßgabe, dass
a) unter den Bedingungen des Verfahrens die Bildung von V² aus V¹ erfolgt
   und
b) für den Fall, dass sowohl M¹ als auch M² Mischungen bedeuten, welche V¹ und V² enthalten, die jeweiligen lsomerenverhältnisse von V¹ und V² in den Mischungen M¹ und M² voneinander verschieden sind.
   In organischen Licht-emittierenden Dioden (OLED) wird die Eigenschaft von Materialien ausgenutzt, Licht zu emittieren, wenn sie durch elektrischen Strom angeregt werden. Unter den zahlreiche Materialien, welche als Emitter für OLEDs vorgeschlagen wurden, sind in der Schrift WO 05/019373 A2 und der älteren deutschen Patent-anmeldung DE 10 2004 057072.8 auch cyclometallierte, Carbenliganden enthaltende Übergangsmetallkomplexe beschrieben. Bei der Synthese der in diesen Schriften offenbarten homoleptischen Komplexe, in welchen die Metallzentren nur mit cyclometallierten Carbenliganden koordiniert sind, werden üblicherweise Gemische von cis/trans- oder fac/mer Isomeren erhalten. Hinsichtlich ihrer Eigenschaften als Emitter in OLEDs zeigen diese Isomeren in der Regel unterschiedliches Verhalten, weshalb in einem weiteren Schritt meist die Isolierung des gewünschten Isomeren mittels entsprechender Verfahren erfolgt. Insbesondere bei Synthesen, in welchen das gewünschte Isomer im Unterschuss entsteht, ist eine Erhöhung seines Anteils durch geeignete Verfahrensweisen nicht nur wünschenswert sondern im Hinblick auf eine effiziente und kostengünstige Herstellung unverzichtbar.

Die thermische sowie photochemische Isomerisierung eines mer-Iridium-Komplexes In sein entsprechendes fac-Isomer offenbart die Publikation von A. B. Tamayo et al. "Synthesis and Characterization of Facial and Meridional Tris-cyclometalated Iridium(III) Complexes", J. Am. Chem. Soc 2003, 125, S. 7377 - 7387, insbesondere auf Seite 7380 in Spalte 2, sowie auf Seite 7387, Spalte 2.

Der Schrift US 200210121638 A1 lässt sich in Beispiel 6, Absatz [0117] entnehmen, dass sich ein mer-Iridium-Complex während der Sublimation in das entsprechenden fac-Isomer umwandelt

Die Aufgabe der vorliegenden Erfingung bestand nun darin, ein Verfahren bereitzustellen, welches auf einfache Weise eine Erhöhung des Anteils des gewünschten Isomers der eingangs gezeigten Formel I ausgehend von seinem anderen Isomer oder von einer, dieses gewünschte Isomer im Unterschuss enthaltenden Isomerenmischung ermöglicht.

Diese Aufgabe wurde durch das eingangs beschriebene Verfahren gelöst.

Maßgeblich für das erfindungsgemäße Verfahren ist, dass unter den Bedingungen des Verfahrens das gewünschte Isomer V² aus dem Isomer V¹ gebildet wird. Dabei kann beispielsweise aus der reinen Verbindung V¹ die Bildung von V² quantitativ erfolgen oder man erhält eine Mischung aus den Isomeren V² und V¹. Dies impliziert auch, dass man aus einer Mischung M¹, welche V¹ enthält, unter den Bedingungen des Verfahrens eine Mischung M² erhält, welche das Isomer V² in einem höheren Anteil enthält als Mischung M¹. Hierbei kann M¹ neben V¹ bereits V² enthalten, muss es jedoch nicht. Desweiteren kann Mischung M¹ neben V¹ auch weitere Komponenten, wie beispielsweise herstellungsbedingte Nebenprodukte, enthalten.

Sofern durch das erfindungsgemäße Verfahren die isomerenreine Verbindung V¹ in eine Mischung M² überführt wird, welche neben der gewünschten isomeren Verbindung V² noch V' enthält, ist es in der Regel möglich, letztere Verbindung, beispielsweise chromatografisch, abzutrennen und erneut dem erfindungsgemäßen Verfahren zu unterziehen. In solchen Fällen, in welchen die erfindungsgemäße Isomerisierung quantitativ von V¹ zu V² erfolgt, erübrigt sich diese iterative Verfahrensweise.

Bevorzugt kommt das erfindungsgemäße Verfahren zur Anwendung für die Isomerisierung von Verbindungen der Formel I, worin die Variablen die folgende Bedeutung aufweisen:
- n: 2 oder 3;
- M: für n gleich 2: Pd oder Pt jeweils in der formalen Oxidationsstufe +II; für n gleich 3: Rh oder Ir jeweils in der formalen Oxidationsstufe +III;
- Do: Donoratom;
- r: gleich 1;
- Y¹, Y²: jeweils unabhängig voneinander Wasserstoff oder Alkyl
oder Y¹ und Y² bilden zusammen mit den Kohlenstoffatomen, an welche sie gebunden sind, einen sechsgliedrigen aromatischen Ring, welcher ein oder zwei Stickstoffatome enthalten kann;
- Y³: Alkyl, Aryl oder Heteroaryl;
- A: eine Brücke mit drei oder vier Atomen, wovon ein oder zwei Atome Heteroatome sein können und die restlichen Atome Kohlenstoffatome sind, so dass die Gruppe 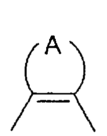 einen fünf- oder sechsgliedrigen heteroaromatischen Ring oder Benzolring bildet, der gegebenenfalls mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert ist.

Besonders bevorzugt kommt das erfindungsgemäße Verfahren zur Anwendung für die Isomerisierung von Verbindungen der Formel I, worin die Variablen die folgende Bedeutung aufweisen:
- n: 2 oder 3;
- M: für n gleich 2: Pd oder Pt jeweils in der formalen Oxidationsstufe +II;
für n gleich 3: Rh oder Ir jeweils in der formalen Oxidationsstufe +III;
- Do: Donoratom N;
- r: gleich;
- Y¹, Y²: jeweils unabhängig voneinander Wasserstoff oder Alkyl
oder Y¹ und Y² bilden zusammen mit den Kohlenstoffatomen, an welche sie gebunden sind, einen Benzolring;
- Y³: Alkyl oder Aryl;
- A: eine Brücke mit vier Atomen, wovon ein Atom ein Heteroatom sein kann und die restlichen Atome Kohlenstoffatome sind, so dass die Gruppe 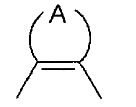 einen sechsgliedrigen heteroaromatischen Ring oder Benzolring bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

Ganz besonders bevorzugt kommt das erfindungsgemäße Verfahren zur Anwendung für die Isomerisierung von Verbindungen der Formel I, worin die Variablen die folgende Bedeutung aufweisen:
- n: 2 oder 3;
- M: für n gleich 2: Pd oder Pt jeweils in der formalen Oxidationsstufe +II;
für n gleich 3: Rh oder Ir jeweils in der formalen Oxidationsstufe +III;
- Do: Donoratom N;
- r: gleich 1;
- Y¹, Y²: jeweils Wasserstoff
oder
- Y¹ und Y²: bilden zusammen mit den Kohlenstoffatomen, an welche sie gebunden sind, einen Benzolring;
- Y³: Alkyl oder Aryl;
- A: eine Brücke mit vier Atomen, wovon ein Atom ein Stickstoffatom sein kann und die restlichen Atome Kohlenstoffatome sind, so dass die Gruppe 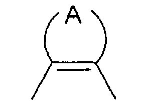 einen Pyridin- oder Benzolring bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

Im Sinne der vorliegenden Anmeldung haben die Begriffe Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl und Halogen die folgenden Bedeutungen:

Unter Alkyl ist ein Rest mit 1 bis 20 Kohlenstoffatomen, bevorzugt 1 bis 10 Kohlenstoffatomen, besonders bevorzugt 1 bis 8 Kohlenstoffatomen zu verstehen. Das Alkyl kann verzweigt oder unverzweigt sein und gegebenenfalls mit einem oder mehreren Heteroatomen, bevorzugt Si, N, O oder S, besonders bevorzugt N, O oder S, unterbrochen sein. Des Weiteren kann das Alkyl mit einem oder mehreren der unter der Definition von Aryl genannten Substituenten substituiert sein. Es ist ebenfalls möglich, dass das Alkyl eine oder mehrere Arylgruppen trägt. Dabei sind alle der vorstehend aufgeführten Arylgruppen geeignet. Besonders bevorzugt ist Alkyl ausgewählt aus der Gruppe bestehend aus Methyl, Ethyl, n-Propyl, iso-Propyl und tert.-Butyl.

Die Alkyloxy-, Alkylthio- und Alkylcarbonylrest ergeben sich formal durch Anbindung der entsprechenden zuvor aufgeführten Alkyl-Reste an ein Sauerstoffatom, ein Schwefelatom bzw. eine Carbonylgruppe, die Alkyloxycarbonyl- und Alkyloxysulfonyl-Reste wiederum formal durch Anbindung der entsprechenden Alkyloxy-Reste an eine Carbonyl- bzw. eine Sulfonylgruppe.

Unter Alkenyl ist ein Rest zu verstehen, der dem vorstehend genannten Alkyl mit mindestens zwei Kohlenstoffatomen entspricht, mit dem Unterschied, dass mindestens eine C-C-Einfachbindung des Alkyls, sofern möglich, durch eine C-C-Doppelbindung ersetzt ist. Bevorzugt weist das Alkenyl eine oder zwei Doppelbindungen auf.

Unter Alkinyl ist dementsprechend ein Rest zu verstehen, der dem vorstehend genannten Alkyl mit mindestens zwei Kohlenstoffatomen entspricht, mit dem Unterschied, dass mindestens eine C-C-Einfachbindung des Alkyls, sofern möglich, durch eine C-C-Dreifachbindung ersetzt ist. Bevorzugt weist das Alkinyl eine oder zwei Dreifachbindungen auf.

Unter Aryl ist ein Rest mit einem Grundgerüst von 6 bis 30 Kohlenstoffatomen, bevorzugt 6 bis 18 Kohlenstoffatomen zu verstehen, der aus einem aromatischen Ring oder mehreren kondensierten aromatischen Ringen aufgebaut ist. Geeignete Grundgerüste sind zum Beispiel Phenyl, Naphthyl, Anthracenyl oder Phenanthrenyl. Dieses Grundgerüst kann unsubstituiert sein (d. h., dass alle Kohlenstoffatome, die substituierbar sind, Wasserstoffatome tragen), oder an einer, mehreren oder allen substituierbaren Positionen des Grundgerüsts substituiert sein. Geeignete Substituenten sind zum Beispiel Alkylreste, bevorzugt Alkylreste mit 1 bis 8 Kohlenstoffatomen, besonders bevorzugt Methyl, Ethyl oder i-Propyl, Arylreste, bevorzugt C₆-Arylreste, die wiederum substituiert oder unsubstituiert sein können, Heteroarylreste, bevorzugt Heteroarylreste, die mindestens ein Stickstoffatom enthalten, besonders bevorzugt Pyridylreste, Alkenylreste, bevorzugt Alkenylreste, die eine Doppelbindung tragen, besonders bevorzugt Alkenylreste mit einer Doppelbindung und 1 bis 8 Kohlenstoffatomen, oder Gruppen mit Donor- oder Akzeptorwirkung. Unter Gruppen mit Donorwirkung sind Gruppen zu verstehen, die einen +I- und/oder +M-Effekt aufweisen, und unter Gruppen mit Akzeptorwirkung sind Gruppen zu verstehen, die einen -l- und/oder -M-Effekt aufweisen. Geeignete Gruppen, mit Donor- oder Akzeptorwirkung sind Halogenreste, bevorzugt F, Cl, Br, besonders bevorzugt F, Alkoxyreste, Aryloxyreste, Carbonylreste, Esterreste, Aminreste, wie z.B. Alkyl-, Dialkyl-, Aryl-, Diarylaminreste oder auch Diarylaminreste mit verbrückten Arylresten, wie 1-Carbazolyl, Amidreste, CH₂F-Gruppen, CHF₂-Gruppen, CF₃-Gruppen, CN-Gruppen, Thiogruppen, SCN-, Nitro- und NO-Gruppen. Sofern die Arylreste substituiert sind tragen sie ganz besonders bevorzugt Substituenten aus-gewählt aus der Gruppe bestehend aus Methyl, F, Cl, Aryloxy und Alkoxy. Bevorzugt ist Aryl ein C₆-C₁₈-Arylrest, besonders bevorzugt ein C₆-Arylrest, der gegebenenfalls mit mindestens einem der vorstehend genannten Substituenten substituiert ist. Be-sonders bevorzugt weist der C₆-C₁₈-Arylrest, bevorzugt C₆-Arylrest, keinen, einen oder zwei der vorstehend genannten Substituenten auf, wobei im Falle eines Substituenten dieser in ortho-, meta- oder para-Position zur weiteren Verknüpfungsstelle des Aryl-restes angeordnet ist; im Falle von zwei Substituenten können diese jeweils in meta-Position oder ortho-Position zur weiteren Verknüpfungsstelle des Arylrestes angeord-net sein oder ein Rest ist in ortho-Position und ein Rest in meta-Position angeordnet oder ein Rest ist in ortho- oder meta-Position angeordnet und der weitere Rest ist in para-Position angeordnet.

Die Aryloxy-, Arylthio- und Arylcarbonylreste ergeben sich formal durch Anbindung der entsprechenden zuvor aufgeführten Aryl-Reste an ein Sauerstoffatom, ein Schwefelatom bzw. eine Carbonylgruppe, die Aryloxycarbonyl- und Aryloxysulfonyl-Reste wiederum formal durch Anbindung der entsprechenden Aryloxy-Reste an eine Carbonyl- bzw. eine Sulfonylgruppe.

Unter Heteroaryl sind Reste zu verstehen, die sich vom vorstehend genannten Aryl dadurch unterscheiden, dass im Aryl-Grundgerüst mindestens ein Kohlenstoffatom durch ein Heteroatom ersetzt ist. Bevorzugte Heteroatome sind N, O und S. Ganz besonders bevorzugt sind ein oder zwei Kohlenstoffatome des Aryl-Grundgerüsts durch Heteroatome ersetzt. Insbesondere bevorzugt ist das Grundgerüst ausgewählt aus Systemen wie Pyridin und fünfgliedrigen Heteroaromaten wie Pyrrol oder Furan. Das Grundgerüst kann an einer, mehreren oder allen substituierbaren Positionen des Grundgerüsts substituiert sein. Geeignete Substituenten sind dieselben, die bereits unter der Definition von Aryl genannt wurden.

Die Variablen Y¹ und Y² bedeuten jeweils unabhängig voneinander Wasserstoff, Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ oder NO. Vorzugsweise bedeuten Y¹ und Y² jeweils unabhängig voneinander Wasserstoff und Alkyl, wobei letzteres insbesondere C₁-C₄-Alkyl, wie z.B. Methyl, Ethyl, n-Propyl, iso-Propyl oder ter.-Butyl, ist. Besonders bevorzugt sind Y¹ und Y² jeweils Wasserstoff.

Desweiteren können Y¹ und Y² zusammen mit den Kohlenstoffatomen, an welche sie gebunden sind, einen sechsgliedrigen aromatischen Ring bilden, welcher ein oder zwei Stickstoffatome enthalten kann. Dieser kann mit einem weiteren, gegebenenfalls anellierten und gegebenenfalls Heteroatome enthaltenden Ring anelliert sein. Hierbei können die Heteroatome Teil des Ringes oder an den Ring angebunden sein ("exoständig"). Vorzugsweise bilden Y¹ und Y² zusammen mit den Kohlenstoffatomen, an welche sie gebunden sind, einen sechsgliedrigen aromatischen Ring, welcher ein oder zwei Stickstoffatome enthalten kann. Besonders bevorzugt bilden Y¹ und Y² zusammen mit den Kohlenstoffatomen, an welche sie gebunden sind, einen Benzolring.

Nachfolgend sind beispielhaft entsprechende anellierte Substrukturen der Carbenligenden gezeigt: 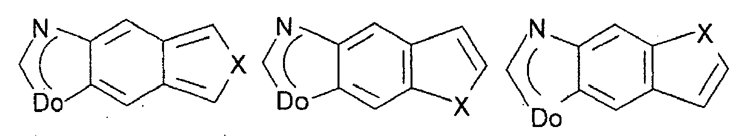 X = CR₂, C(O), O, S, NR; R = Wasserstoff, Alkyl, Aryl

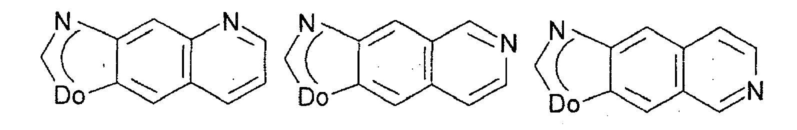

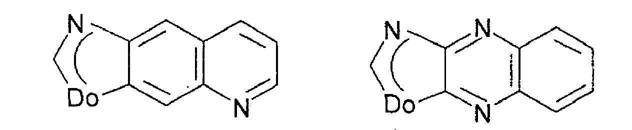

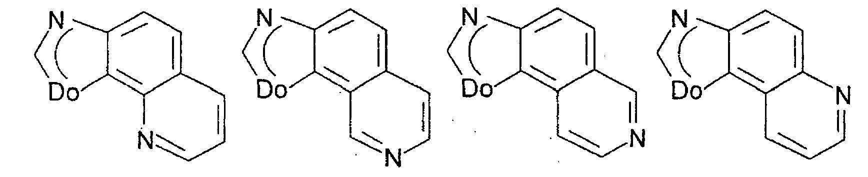

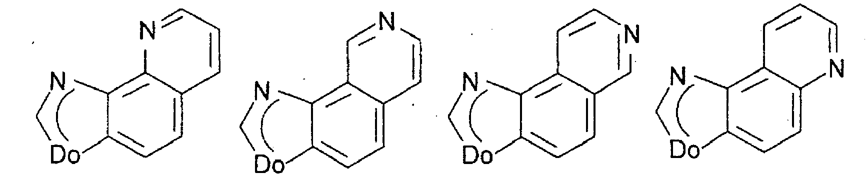

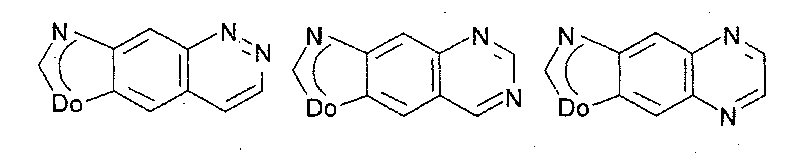

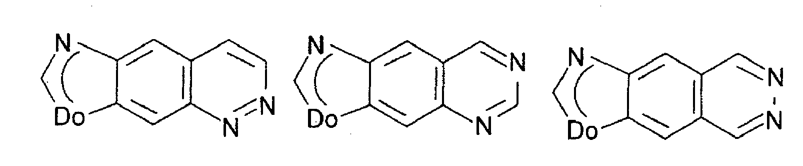

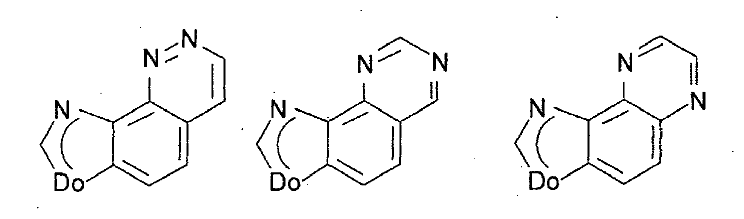

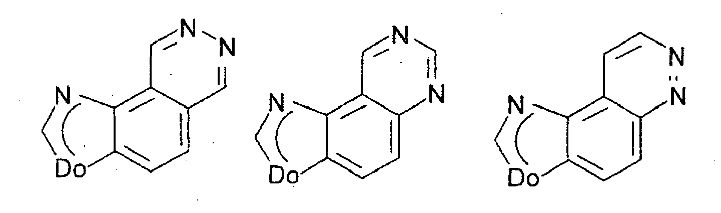

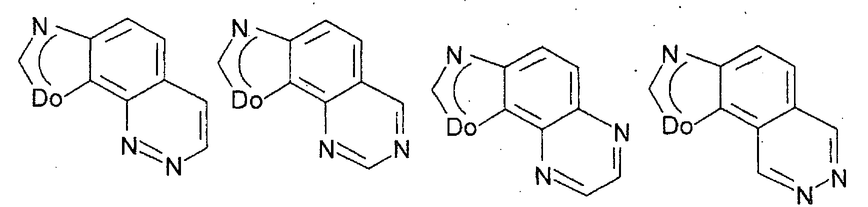

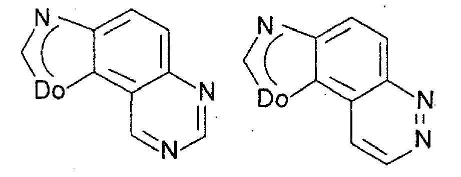

Darüberhinaus sind auch noch höher anellierte Substrukturen, weiche sich von den zuvor gezeigten Substrukturen z.B. durch Benzanellierung ableiten, möglich.

Weitere Beispiele für höher anellierte Substrukturen der Carbenliganden sind auch:

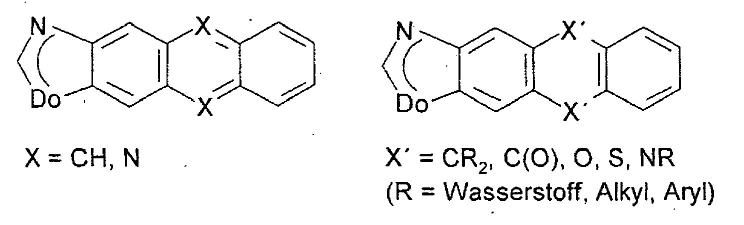

Bevorzugte und besonders bevorzugte Substrukturen für die Carbenliganden sind: 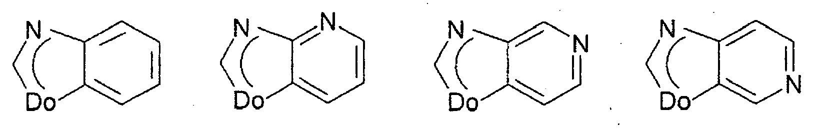 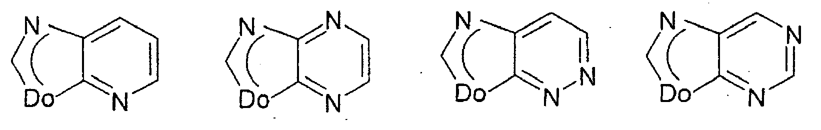 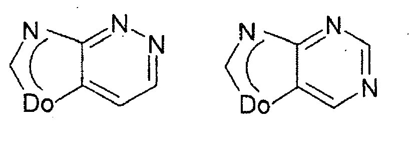 wobei Do die Bedeutung N, O, S oder P, insbesondere N, zukommt.

Sofern Do die Bedeutung N oder P, insbesondere N, zukommt bedeutet die Variable Y³ in Formel I Alkyl, Alkenyl, Alkinyl, Aryl oder Heteroaryl, bevorzugt Alkyl, Aryl oder. Heteroaryl, besonders bevorzugt Alkyl oder Aryl. Als Alkyl sind insbesondere C₁-C₄-Alkyl, wie z.B. Methyl, Ethyl, n-Propyl, iso-Propyl oder ter.-Butyl, und als Aryl insbesondere Phenyl hervorzuheben.

Die Variable A in Formel I bedeutet eine Brücke mit drei oder vier Atomen, wovon ein oder zwei Atome Heteroatome sein können und die restlichen Atome Kohlenstoffatome sind, so dass die Gruppe 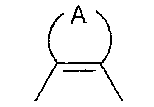 (im Folgenden auch als "G" bezeichnet) einen fünf- oder sechsgliedrigen heteroaromatischen Ring oder einen Benzolring bildet. Als Heteroatome kommen hierbei insbesondere O, N und S in Betracht. Die Gruppe G kann mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert sein. Sofern die genannten Substituenten Heteroatome enthalten, erfolgt deren Anbindung an die Gruppe G üblicherweise über Kohlenstoffatome der Gruppe G. Die Anbindung kann jedoch auch über geeignete Heteroatome der Gruppe G stattfinden.

Nachfolgend sind geeignete fünfgliedrige heteroaromatische Ringe in der Bedeutung der Gruppe G aufgeführt: 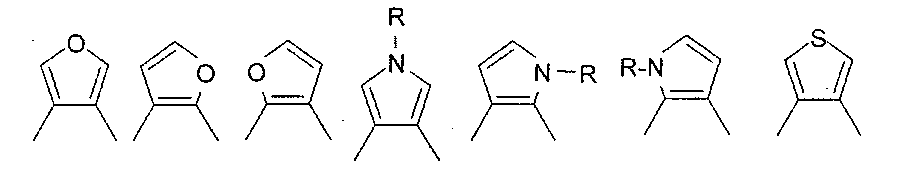 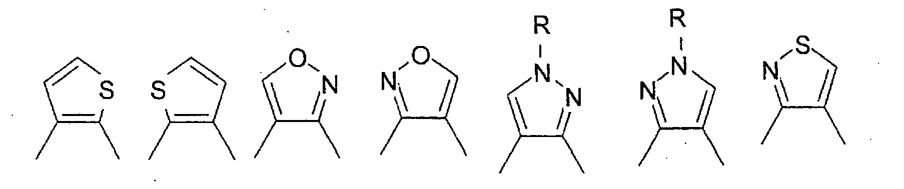 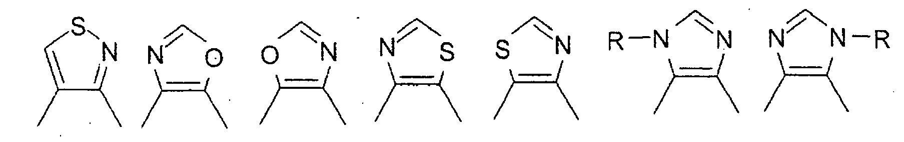 wobei R insbesondere Wasserstoff, Alkyl, Alkenyl, Alkinyl, Aryl oder Heteroaryl -wie zuvor definiert- bezeichnet, wobei die Bindung des Ringstickstoffatoms für R gleich Heteroaryl über ein Kohlenstoffatom oder gegebenenfalls über ein hierzu geeignetes Heteroatom des Heteroaryls erfolgt.

Geeignete sechsgliedrige heteroaromatische Ringe in der Bedeutung der Gruppe G sind:

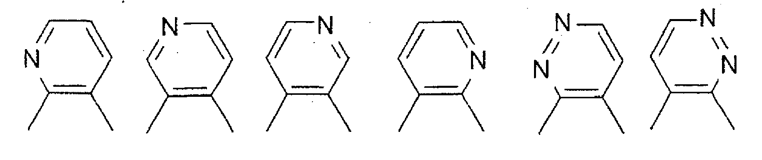

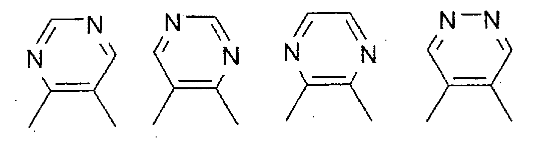

Desweiteren kann die Gruppe G auch mit einem weiteren, gegebenenfalls Heteroatome enthaltenden Ring anelliert sein, wobei letzterer Ring selbst wieder anelliert und mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert sein kann.

Beispiele für solche höher anellierten Gruppen G sind: 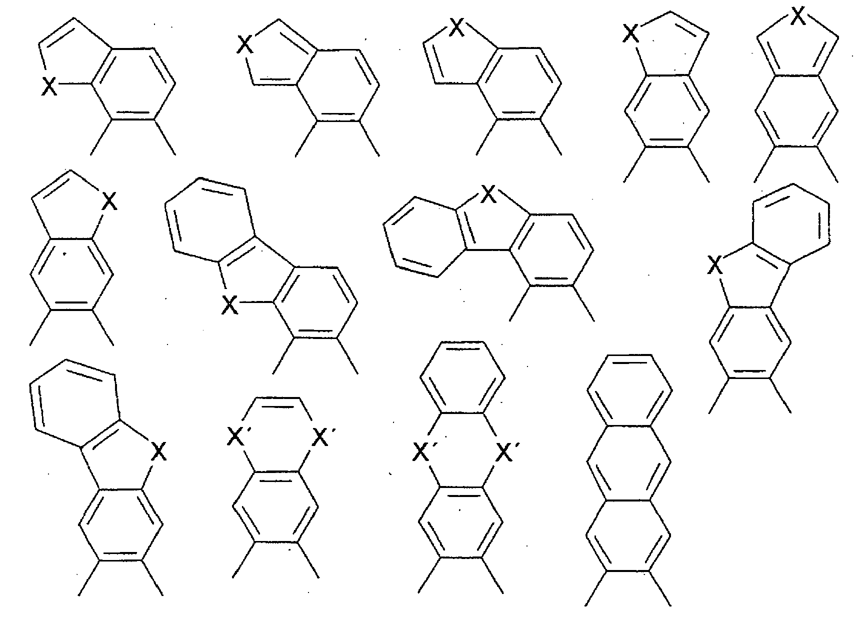 worin X O, S oder NR, mit R gleich Wasserstoff, Alkyl oder Aryl, und die beiden X' unabhängig voneinander eine Carbonylgruppe, CR₂-Gruppe, O, S oder NR, mit R gleich Wasserstoff, Alkyl oder Aryl, bedeuten.

Bevorzugte anellierte Gruppen G sind: 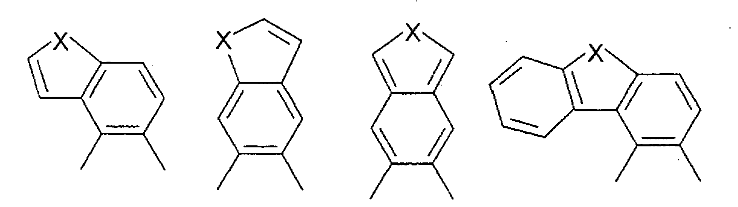 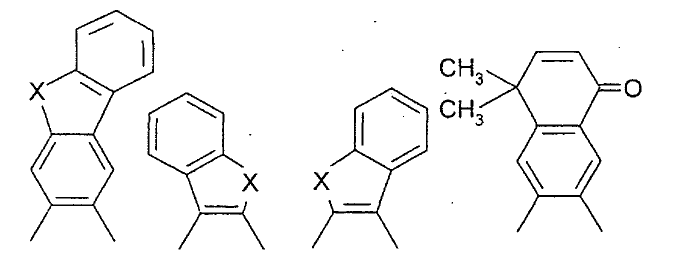 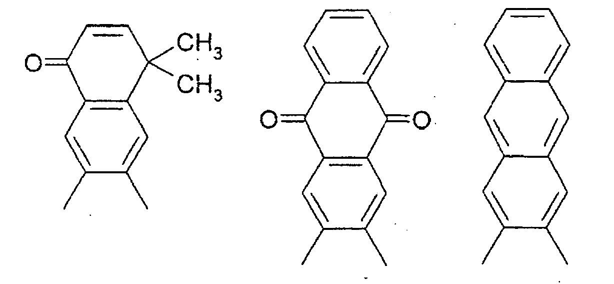 worin X die Bedeutung O, S oder NR, mit R gleich Wasserstoff, Alkyl oder Aryl, bevorzugt Wasserstoff oder Alkyl, zukommt.

Bevorzugt bildet A eine Brücke mit drei oder vier Atomen, wovon ein oder zwei Atome Heteroatome sein können und die restlichen Atome Kohlenstoffatome sind, so dass die Gruppe G einen fünf- oder sechsgliedrigen heteroaromatischen Ring oder Benzolring bildet, der gegebenenfalls mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert ist.

Besonders bevorzugt bildet A eine Brücke mit vier Atomen, wovon ein Atom ein Heteroatom sein kann und die restlichen Atome Kohlenstoffatome sind, so dass die Gruppe G einen sechsgliedrigen heteroaromatischen Ring oder Benzolring bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

Ganz besonders bevorzugt bildet A eine Brücke mit vier Atomen, wovon ein Atom ein Stickstoffatom sein kann und die restlichen Atome Kohlenstoffatome sind, so dass die Gruppe G einen Pyridin- oder Benzolring; bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

Insbesondere kommen hierbei für die Gruppe G in Betracht: 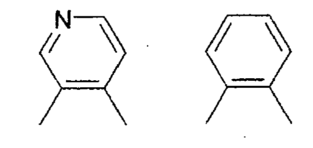 wobei die Gruppe G gemäß den zuvor beschriebenen Bevorzugungen substituiert sein kann. Sofern die genannten Substituenten Heteroatome enthalten, erfolgt deren Anbindung an die Gruppe G üblicherweise über Kohlenstoffatome der Gruppe G, sie kann jedoch auch über geeignete Heteroatome der Gruppe G stattfinden.

Als substituierte Gruppen G sind hier insbesondere zu erwähnen: 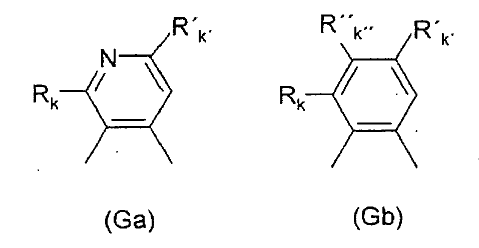 worin R" für CN, CHO, Alkylcarbonyl, Arylcarbonyl, Carboxyl, Alkyloxycarbonyl, Aryloxycarbonyl, Hydroxysulfonyl, Aikyloxysulfonyl, Aryloxysulfonyl, NO₂ oder NO steht, k" Werte von 0 oder 1 annimmt, R und R' jeweils unabhängig voneinander Alkyl oder Halogen, insbesondere Fluor, bezeichnen und k und k' Werte von 0 oder 1 annehmen, mit der Maßgabe, dass in Gruppe (Ga) die Summe aus k und k' 1 oder 2 beträgt und in Gruppe (Gb) die Summe aus k und k' 1 oder 2 beträgt, wenn k" einen Wert von 0 annimmt, und die Summe aus k und k" 0, 1 oder 2 beträgt, wenn k" einen Wert von 1 annimmt. Für den Fall, dass k" einen Wert von 0 annimmt beträgt die Summe aus k und k' vorzugsweise 2; für den Fall, dass k" einen Wert von 1 annimmt, beträgt die Summe aus k und k" vorzugsweise 0 oder 2. Einem Wert von 0 für k, k' oder k" kommt hierbei die Bedeutung zu, dass sich an der entsprechenden Position des Ringes keiner der genannten Substituenten R, R' oder R" und damit ein Wasserstoffatom befindet. Nehmen k und k' jeweils einen Wert von 1 an, so sind die Substituenten vorzugsweise gleich.

Für R und R' kommen als Alkyl insbesondere Methyl, Ethyl, n-Propyl, iso-Propyl und tert.-Butyl in Betracht. Als Alkyl bzw. Aryl, welches in den entsprechenden Resten der Definition von R" enthalten ist, kommen insbesondere Methyl, Ethyl, n-Propyl, iso-Propyl und tert.-Butyl bzw. Phenyl, Naphthyl, Anthracenyl oder Phenanthrenyl, welche jeweils mit Substituenten ausgewählt aus der Gruppe bestehend aus Methyl, F, Cl, Phenoxy, Methoxy, Ethoxy, n-Propoxy, iso-Propoxy und tert.-Butoxy substituiert sein können, in Betracht, wobei gegebenenfalls substituiertes Phenyl bevorzugt ist.

Als solche substituierten Gruppen G sind zu nennen:

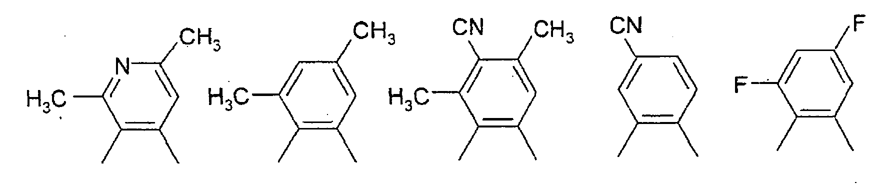

Verbindungen V¹, welche nach dem erfindungsgemäßen Verfahren isomerisiert werden können, sind beispielsweise 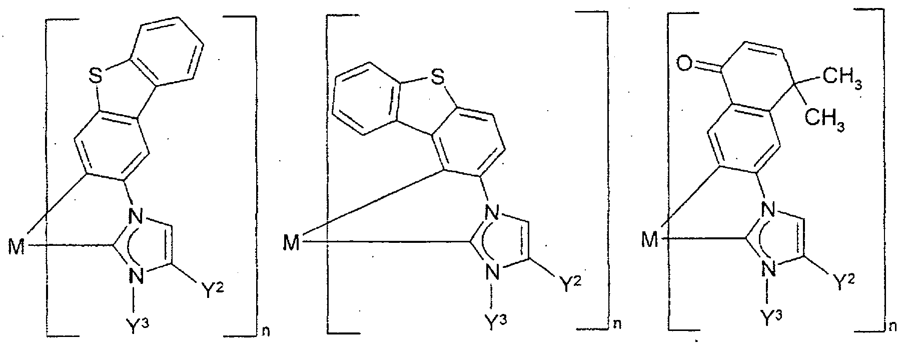 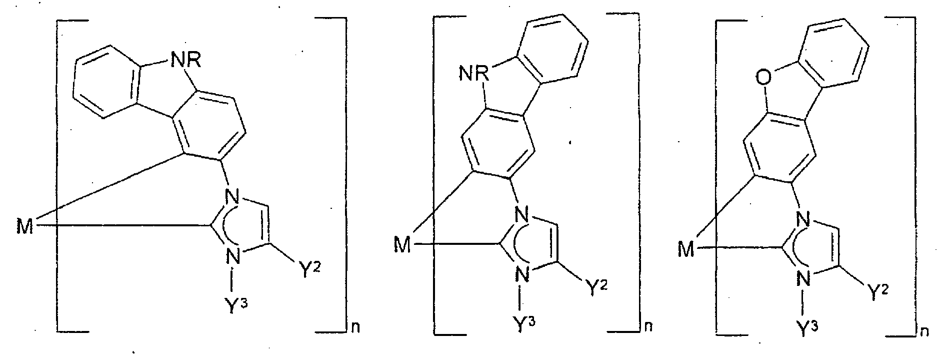 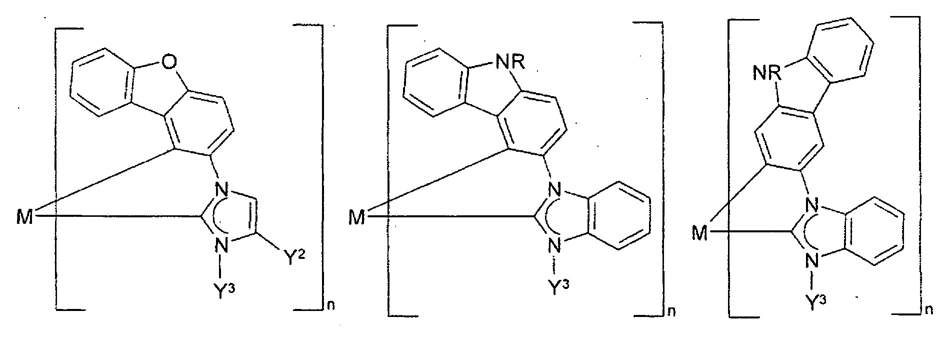 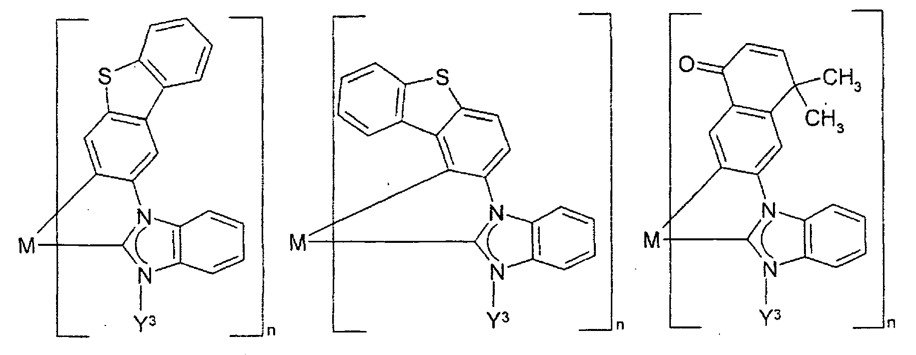 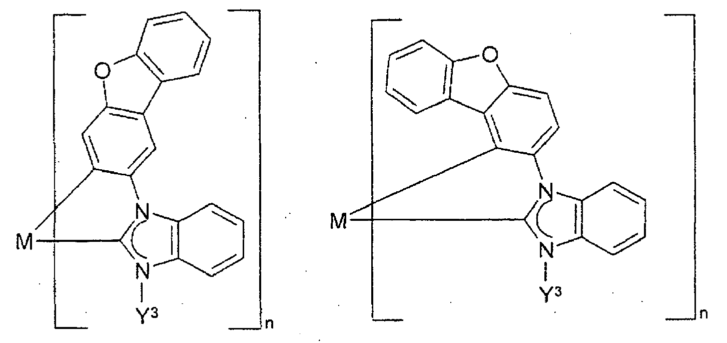 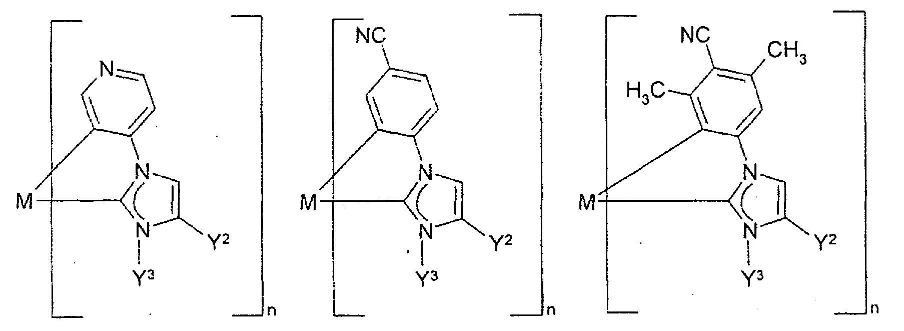 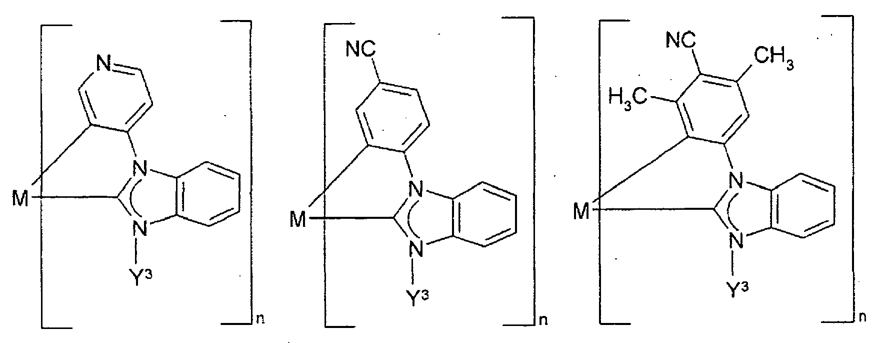 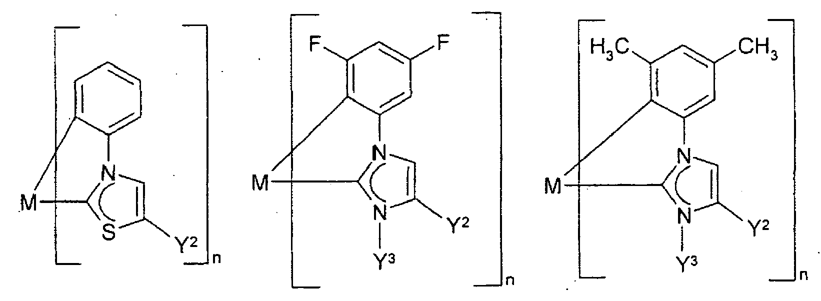 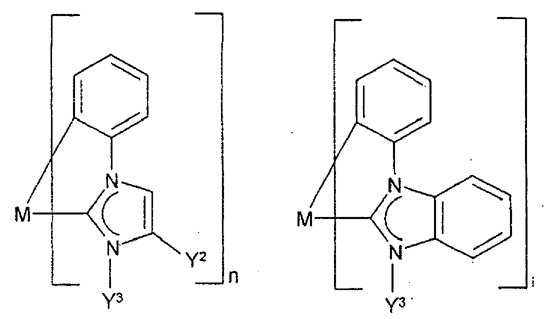 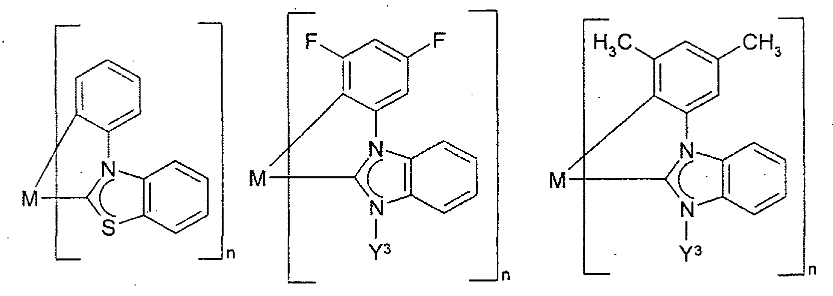 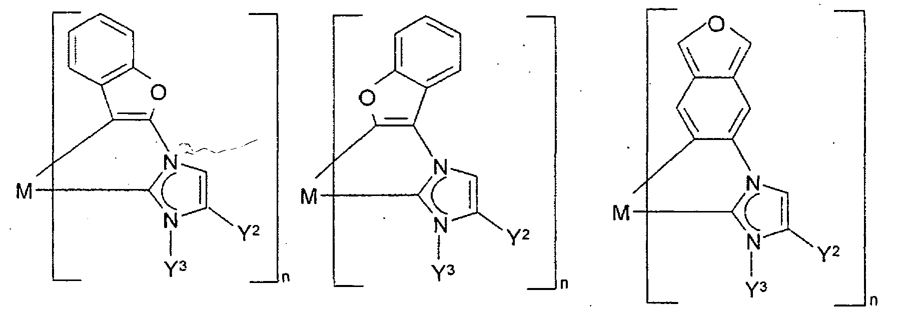 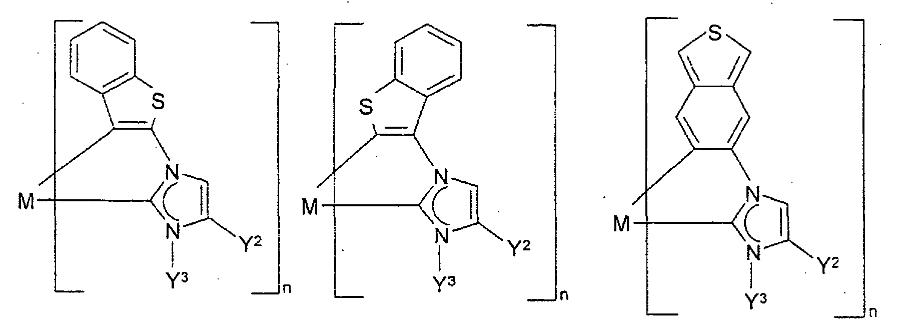 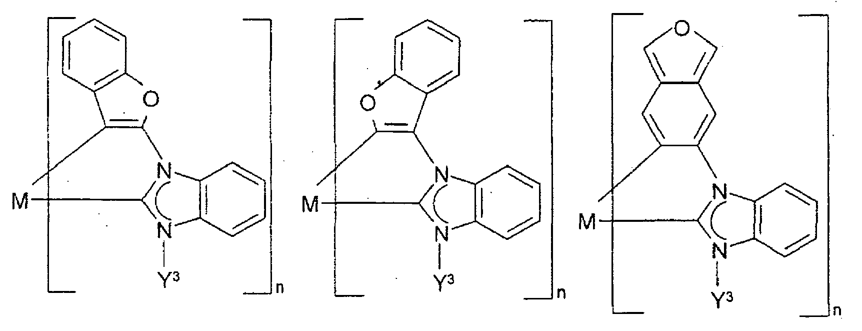 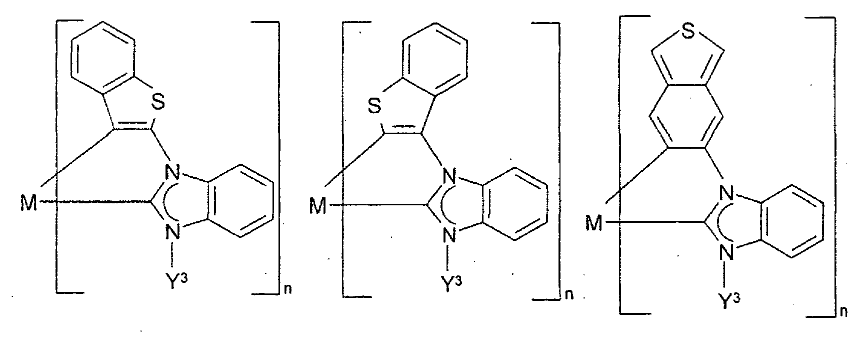 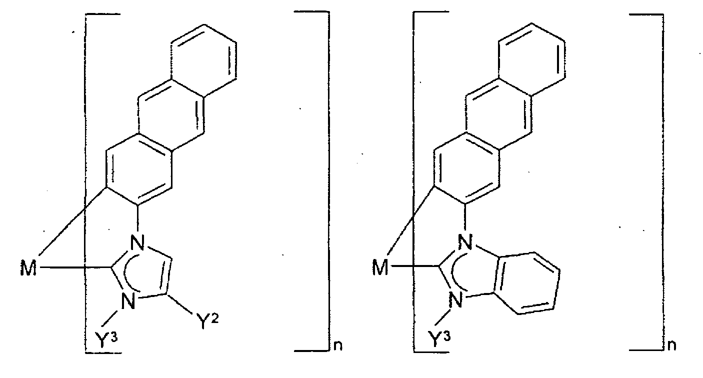 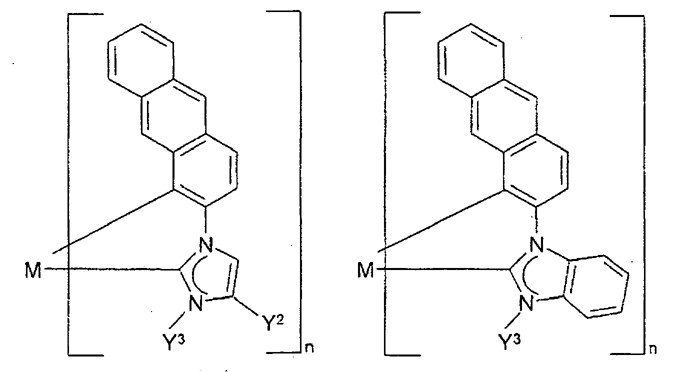 worin M für Ru(III), Os(III), Co(III), Rh(III), Ir(III), Pd(II) oder Pt(II) steht, n für Ru(III), Os(III), Co(III), Rh(III) und Ir(III) den Wert 3, für Pd(II) und Pt(II) den Wert 2 annimmt und die Variablen Y² und Y³ den zuvor ausgeführten allgemeinen Definitionen und ihren Bevorzugungen entsprechen. Dementsprechend bedeutet die Variable Y³ Alkyl, Alkenyl, Alkinyl, Aryl oder Heteroaryl, bevorzugt Alkyl, Aryl oder Heteroaryl, besonders bevorzugt Alkyl oder Aryl. Als Alkyl sind insbesondere C₁-C₄-Alkyl, wie z.B. Methyl, Ethyl, n-Propyl, iso-Propyl oder ter.-Butyl, und als Aryl insbesondere Phenyl hervorzuheben. Die Variable Y² bedeutet Wasserstoff, Alkyl, Alkenyl, Alkinyl, Aryl, Heteroaryl, Alkyloxy, Aryioxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ oder NO, bevorzugt Wasserstoff oder Alkyl, besonders bevorzugt Wasserstoff.

Weitere Verbindungen V¹ der Formel I, welche nach dem erfindungsgemäßen Verfahren isomerisiert werden können, sind beispielsweise auch 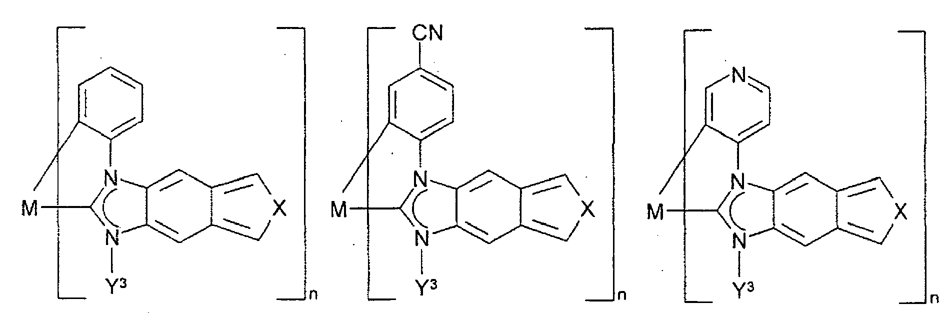 X=O,S 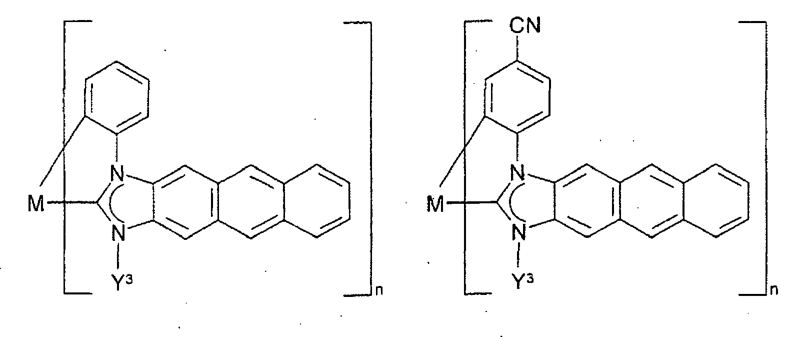 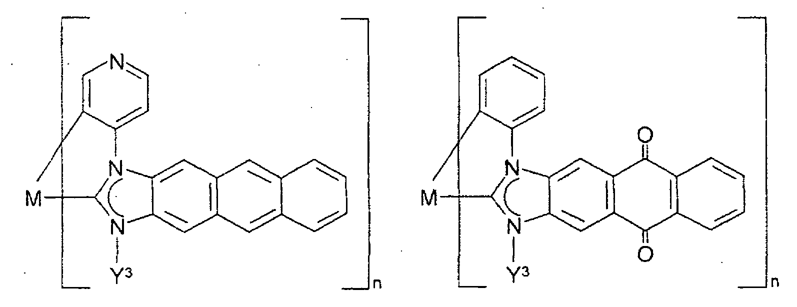 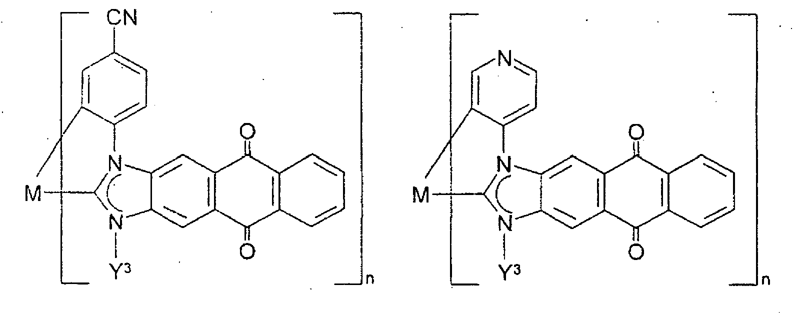 worin M für Ru(III), Os(III), Co(III), Rh(III), Ir(III), Pd(II) oder Pt(II) steht, n für Ru(III), Os(III), Co(III), Rh(III) und Ir(III) den Wert 3, für Pd(II) und Pt(II) den Wert 2 annimmt und die Variable Y³ der zuvor ausgeführten allgemeinen Definition und ihrer Bevorzugungen entspricht. Dementsprechend bedeutet die Variable Y³ Alkyl, Alkenyl, Alkinyl, Aryl oder Heteroaryl, bevorzugt Alkyl, Aryl oder Heteroaryl, besonders bevorzugt Alkyl oder Aryl. Als Alkyl sind insbesondere C₁-C₄-Alkyl, wie z.B. Methyl, Ethyl, n-Propyl, iso-Propyl oder ter.-Butyl, und als Aryl insbesondere Phenyl hervorzuheben.

Vorzugsweise wird für das erfindungsgemäße Verfahren ein Lösungsmittel oder Lösungsmittelgemisch verwendet, welches aus einer oder mehreren Verbindungen besteht, welche ausgewählt sind aus der Gruppe bestehend aus Wasser, C₁-C₄-Alkanolen, symmetrischen und unsymmetrischen Di(C₁-C₄)-alkylethern, symmetrischen und unsymmetrischen Di(C₁-C₄)-alkylketonen, teilweise halogenierten C₁-C₄-Alkanen, perhalogenierten C₁-C₄-Alkanen, teilweise halogenierten C₂-C₄-Alkenen, perhalogenierten C₂-C₄-Alkenen, fünf- und sechsgliedrigen gesättigten cyclischen Ethern mit einem Sauerstoffatom, sechsgliedrigen gesättigten cyclischen Ethern mit zwei nicht benachbarten Sauerstoffatomen, N-C₁-C₄-Alkylformamiden, N,N-Di(C₁-C₄-Alkyl)formamiden, N-C₁-C₄-Alkyl-acetamiden, N,N-Di(C₁-C₄-Alkyl)acetamiden, fünf-, sechs- und siebengliedrigen gesättigten Lactonen, fünf-, sechs- und siebengliedrigen gesättigten Lactamen, C₁-C₄-Alkanoyl-C₁-C₄-Alkylestern, symmetrischen und unsymmetrischen Di(C₁-C₄)-alkylsulfoxiden, Nitrilen von C₂-C₄-Carbonsäuren, Nitrilen von einkernigen aromatischen Carbonsäuren, einkernigen Aromaten und einkernigen Heteroaromaten.

C₁-C₄-Alkanole sind beispielsweise Methanol, Ethanol, Propanol, Isopropanol, Butanol, sec-Butanol und Isobutanol.

Symmetrische und unsymmetrische Di(C₁-C₄)-alkylether sind insbesondere Dimethyl- und Diethylether.

Symmetrische und unsymmetrischen Di(C₁-C₄)-alkylketone sind insbesondere Aceton, Methylethylketon und Methyl-tert-butylketon.

Teilweise halogenierte C₁-C₄-Alkane sind insbesondere Methylenchlorid, Chloroform, 1,1- und 1,2-Dichlorethan, 1,1,1- und 1,1,2-Trichiorethan sowie 1,2- und 1,3-Dichlorpropan.

Perhalogenierte C₁-C₄-Alkane sind insbesondere Tetrachlorkohlenstoff und Chlorfluorkohlenwasserstoffe, wie 1,1,2,2-Tetrachlordifluor- und 1,1,2-Trichlortrifluorethan.

Bei den teilweise halogenierten C₂-C₄-Alkenen ist insbesondere Trichlorethylen, bei den perhalogenierten C₂-C₄-Alkenen insbesondere Tetrachlorethylen zu nennen.

Fünf- und sechsgliedrige gesättigte cyclische Ether mit einem Sauerstoffatom sind insbesondere Tetrahydrofuran und Tetrahydropyran, ein sechsgliedriger gesättigter cyclischer Ether mit zwei nicht benachbarten Sauerstoffatomen ist insbesondere Dioxan.

Unter den N,N-Di(C₁-C₄-Alkyl)formamiden und N,N-Di(C₁-C₄-Alkyl)acetamiden sind insbesondere Dimethylformamid und Dimethylacetamid zu nennen.

Unter fünf-, sechs- und siebengliedrigen gesättigten Lactonen und Lactamen sind insbesondere y-Butyrolacton und N-Methylpyrrolidinon hervorzuheben.

C₁-C₄-Alkanoyl-C₁-C₄-Alkylester sind insbesondere Ameisensäuremethyl- und -ethylester sowie Essigsäuremethyl-, -ethyl-, -propyl- und -butylester.

Besonders bevorzugt verwendet man im erfindungsgemäßen Verfahren ein Lösungsmittel oder Lösungsmittelgemisch, welches aus einer oder mehreren Verbindungen besteht, welche ausgewählt sind aus der Gruppe bestehend aus Wasser, C₁-C₄-Alkanolen, insbesondere Methanol, Ethanol, Propanol und Isopropanol, symmetrischen und unsymmetrischen Di(C₁-C₄)-alkylketonen, insbesondere Aceton und Methyl-tert-butylketon, teilweise halogenierten C₁-C₄-Alkanen, insbesondere Methylenchlorid und Chloroform, Tetrahydrofuran, Dioxan, N,N-Dimethylformamid, N,N-Dimethylacetamid, N-Methylpyrrolidinon, Ameisensäure-C₁-C₄-Alkylestern, insbesondere Ameisensäuremethyl- und -ethylester, Essigsäure-C₁-C₄-Alkylestern, insbesondere Essigsäuremethyl- und -ethylester, Dimethylsulfoxid, Butylmethyfsulfoxid, Acetonitril, Propionitril, Benzonitril, Picolinsäure-, Nicotionsäure- und Isonicotionsäurenitril, Benzol, Toluol, o-, m- und p-Xylol, Pyridin und 2-, 3- und 4-Methylpyridin,

Im erfindungsgemäßen Verfahren und seinen bevorzugten Ausführungsformen verwendet man eine Brönsted-Säure oder ein Gemisch von Brönsted-Säuren, welche vorzugsweise aus einer oder mehreren Verbindungen besteht, welche ausgewählt sind aus der Gruppe bestehend aus Halogenwasserstoff, wasserfreien anorganischen Säuren, wasserfreien Carbonsäuren, wasserfreien aliphatischen und aromatischen Sulfonsäuren und wasserfreien teilweise und vollständig fluorierten aliphatischen und aromatischen Sulfonsäuren.

Unter Halogenwasserstoff sind beispielsweise Chlorwasserstoff, Bromwasserstoff und Iodwasserstoff zu verstehen.

Wasserfreie anorganische Säuren sind beispielsweise Schwefelsäure und Phosphorsäure, wasserfreie Carbonsäuren beispielsweise Ameisensäure, Essigsäure und Trifluoressigsäure.

Bei den wasserfreien aliphatischen und aromatischen Sulfonsäuren und wasserfreien teilweise und vollständig fluorierten aliphatischen und aromatischen Sulfonsäuren sind beispielsweise H₃C-SO₃H, F₃C-SO₃H, F₃C-CH₂-SO₃H, F₉C₄-SO₃H, 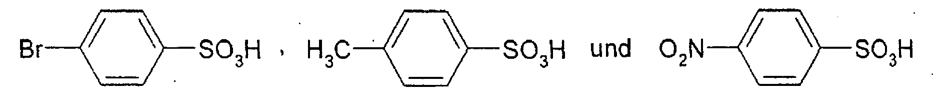 zu nennen.

Besonders bevorzugt verwendet man eine Brönsted-Säure oder ein Gemisch von Brönsted-Säuren, welches aus einer oder mehreren Verbindungen besteht, welche ausgewählt sind aus der Gruppe bestehend aus Chlorwasserstoff, Bromwasserstoff, wasserfreier Schwefelsäure, wasserfreier Ameisensäure, wasserfreier Methansulfonsäure, wasserfreier Trifluormethansulfonsäure, wasserfreier Trifluoressigsäure und wasserfreier Essigsäure.

Die eine oder mehreren Brönsted-Säuren können sowohl als wässrige Lösung zusammen mit einem oder mehreren anderen von Wasser verschiedenen Lösungsmitteln als auch als wasserfreie Verbindungen mit einem oder mehreren, von Wasser verschiedenen Lösungmitteln verwendet werden.

Vorteilhaft für das erfindungsgemäße Verfahren ist es, wenn zum einen die wässrige Lösung der einen oder mehreren Brönsted-Säuren mit dem Lösungsmittel oder Lösungsmittelgemisch zumindestens teilweise mischbar ist und zum anderen sich die Verbindung V¹ oder die Mischung M¹, welche die Verbindung V¹ enthält, zumindestens teilweise entweder in der wässrigen Lösung der einen oder mehreren Brönsted-Säuren oder dem Lösungsmittel oder Lösungsmittelgemisch zumindestens teilweise löst.

Desweiteren ist vorteilhaft für das erfindungsgemäße Verfahren, wenn sowohl die wasserfreie Brönsted-Säure oder das Gemisch von wasserfreien Brönsted-Säuren als auch die Verbindung V¹ oder die Mischung M¹, welche die Verbindung V¹ enthält, zumindestens teilweise im Lösungsmittel oder Lösungsmittelgemisch löslich ist.

Im Sinne der vorliegenden Erfindung ist beispielsweise eine Lösung von Chlorwasserstoff in Ethanol, welches Restfeuchte enthält, als Lösung von Chlorwasserstoff in einem Lösungsmittelgemisch aus Wasser und Ethanol aufzufassen.

Bevorzugt wird das erfindungsgemäße Verfahren und seine bevorzugten Ausführungsformen so durchgeführt, dass man die Brönsted-Säure oder das Gemisch von Brönsted-Säuren in einer Gesamtkonzentration von 10⁻⁷ bis 1 mol/l, vorzugsweise in einer Gesamtkonzentration von 10⁻⁵ bis 10⁻¹ mol/l, im Lösungsmittel oder Lösungsmittelgemisch verwendet.

### Beispiele:

### Beispiel 1:

Isomerisierung von mer-Tris-[N-(p-cyanophenyl)-N'-methylimidazolyliden-C², C^{2'}]-iridium(III) zu fac-Tris-[N-(p-cyanophenyl)-N'-methylimidazolyliden-C², C^{2'}]-iridium(III)

Eine Lösung von reinem mer-Tris-[N-(p-cyanophenyl)-N'-methylimidazolyliden-C², C^{2'}]-iridium(III) (20 mg, 27 µmol) in Aceton (9,75 ml) wurde bei Raumtemperatur mit 0,1 M Salzsäure (0,25 ml) versetzt. Man ließ die Mischung 4 Stunden unter Rückfluß rühren. Nach dem anschließenden Entfernen der flüchtigen Komponenten am Rotationsverdampfer erhielt man einen gelblichen Feststoff, der unter Ölpumpenvakuum getrocknet wurde. Ausbeute: 20 mg (27 µmol, 100% d.Th.).

Durch ¹H-NMR-Spektroskopie wurde das molare Verhältnis von fac- zu mer-Isomerem zu 3 : 1 bestimmt. Aus dem reinen mer-Isomeren wurde dementsprechend eine Mischung erhalten, welche dieses nur noch in einem molaren Anteil von 25%, das fac-Isomer jedoch in einem molaren Anteil von 75% enthielt.

Das Isomerengemisch konnte säulenchromatographisch (Kieselgel, Essigester/Cyclohexan 9:1) getrennt werden.

Ausbeute: 15 mg fac-Isomer (20 µmol, 75 Mol-%), 5 mg mer-Isomer (7 µmol, 25 Mol- %).

Analytik des fac-Isomer:
¹H-NMR (d₆-DMSO/CD₂Cl₂ 4:1, 500 MHz): δ = 3,06 (s, 9H), 6,66 (d, J 2,0, 3H), 7,11 (d, J 2,0, 3H), 7,28 (dd, J 8,0, 2,0, 3H), 7,49 (d, J 8,0, 3H), 7,87 (d, J 2,0, 3H).
¹³C-NMR (d₆-DMSO/CD₂Cl₂ 4:1, 500 MHz): δ = 36,2, 107,0, 111,1, 115,5, 120,7, 122,4,
125,9, 139,7, 149,2, 151,5, 174,6.
ESI-MS (MeCN/H₂O 8:2): m/z = 737,1751 (M⁺, korrektes Isotopenmuster, ber.: 737,1755), 755 (M+NH₄⁺, korrektes Isotopenmuster).

Das abgetrennte mer-Isomer kann einer erneuten erfindungsgemäßen Isomerisierung unterzogen werden kann.

### Beispiel 2:

### Isomerisierung von Tris-[N, N'-diphenylbenzimidazolyliden-C², C²]-iridium(III)

a) Eine Probe fac-Tris-[N, N'-diphenylbenzimidazolyliden-C², C^{2'}]-iridium(III) wurde in Chloroform gelöst, das katalytische Mengen Chlorwasserstoff enthielt. Die Lösung wurde über Nacht auf 40 °C erwärmt und anschließend im Vakuum vom Lösungsmittel und Chlorwasserstoff befreit.
b) Eine Probe mer-Tris-[N, N'-diphenylbenzimidazolyliden-C², C^{2'}]-iridium(III) wurde in gleicher Weise wie unter a) behandelt.

NMR-spektroskopisch wurde festgestellt, dass das fac-Isomer in a) unverändert vorlag, sich das mer-Isomer in b) dagegen vollständig in das fac-Isomer umgewandelt hatte.

### Analytik des fac-Isomer:

¹H-NMR (CD₂Cl₂, 500 MHz):
δ= 8,10 (d, 3H), 7,94 (d, 3H), 7,28 (m, 6H), 7,06 (m, 3H), 7,02 (m, 3H), 6,74 (m, 3H), 6,68 (m, 3H), 6,60 (d, 3H), 6,56 (d, 3H), 6,42 (d, 3H), 6,29 (m, 3H), 6,18 (d, 3H).

### Analytik des mer-Isomer:

¹H-NMR (CD₂Cl₂, 500 MHz, -20°C):
δ = 8,30 (d, 1H), 7,89 (m, 2H), 7,73 (d, 1H), 7,56 (d, 1H), 7,31 (d, 1H), 7,28-7,16 (m, 5H), 7,08-7,01 (m, 3H), 6,98 (m, 1 H), 6,93 (m, 1H), 6,85-6,20 (m, 21 H), 5,78 (d, 1 H), 5,64 (d, 1H).

## Patentansprüche

1. Verfahren zur Überführung einer isomerenreinen Verbindung V¹ der Formel I 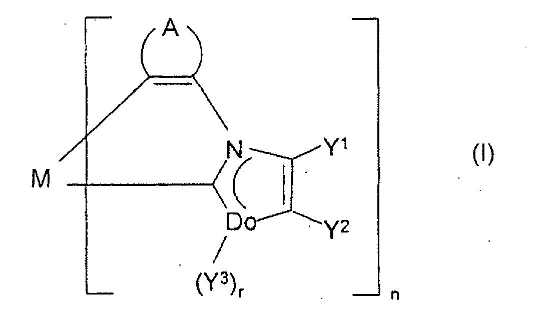 oder einer Mischung M¹, welche V¹ enthält, in eine von V¹ verschiedene isomere Verbindung V² der Formel oder eine Mischung M², welche V² enthält, wobei die Variablen die folgenden Bedeutungen aufweisen:
n 2 oder 3;
M für n gleich 2: Pd oder Pt jeweils in der formalen Oxidationsstufe +II; für n gleich 3: Ru, Os, Co, Rh oder Ir jeweils in der formalen Oxidationsstufe +III;
Do Donoratom ausgewählt aus der Gruppe bestehend aus N, O, S und P;
r gleich 1, wenn Do N oder P ist, und 0, wenn Do O oder S ist;
Y¹, Y² jeweils unabhängig voneinander Wasserstoff, Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ oder NO,
oder
Y¹ und Y² bilden zusammen mit den Kohlenstoffatomen, an welche sie gebunden sind, einen sechsgliedrigen aromatischen Ring, welcher ein oder zwei Stickstoffatome enthalten kann und gegebenenfalls mit einem weiteren, gegebenenfalls anellierten und gegebenenfalls Heteroatome enthaltenden Ring anelliert ist;
Y³ Alkyl, Alkenyl, Alkinyl, Aryl oder Heteroaryl;
A eine Brücke mit drei oder vier Atomen, wovon ein oder zwei Atome Heteroatome sein können und die restlichen Atome Kohlenstoffatome sind, so dass die Gruppe 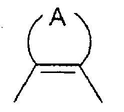 einen fünf- oder sechsgliedrigen heteroaromatischen Ring oder Benzolring bildet, der gegebenenfalls mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert und gegebenenfalls mit einem weiteren, gegebenenfalls Heteroatome enthaltenden Ring anelliert ist, welcher ebenfalls anelliert und mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert sein kann;
**dadurch gekennzeichnet, dass** man eine Brönsted-Säure oder ein Gemisch von Brönsted-Säuren auf V¹ oder M¹ in Gegenwart eines Lösungsmittels oder Lösungsmittelgemisches bei einer Temperatur von 0°C bis zum Siedepunkt des Lösungsmittels oder des Lösungsmittelgemisches einwirken lässt, mit der Maßgabe, dass
a) unter den Bedingungen des Verfahrens die Bildung von V² aus V¹ erfolgt
und
b) für den Fall, dass sowohl M¹ als auch M² Mischungen bedeuten, welche V¹ und V² enthalten, die jeweiligen Isomerenverhältnisse von V¹ und V² in den Mischungen M¹ und M² voneinander verschieden sind.

2. Verfahren nach Anspruch 1, **dadurch gekennzeichnet, dass** in Formel I die Variablen die folgende Bedeutung aufweisen:
n 2 oder 3;
M für n gleich 2: Pd oder Pt jeweils in der formalen Oxidationsstufe +II;
für n gleich 3: Rh oder Ir jeweils in der formalen Oxidationsstufe +III;
Do Donoratom N;
r gleich 1;
Y¹,Y² jeweils unabhängig voneinander Wasserstoff oder Alkyl
oder Y¹ und Y² bilden zusammen mit den Kohlenstoffatomen, an welche sie gebunden sind, einen sechsgliedrigen aromatischen Ring, welcher ein oder zwei Stickstoffatome enthalten kann;
Y³ Alkyl, Aryl oder Heteroaryl;
A eine Brücke mit drei oder vier Atomen, wovon ein oder zwei Atome Heteroatome sein können und die restlichen Atome Kohlenstoffatome sind, so dass die Gruppe 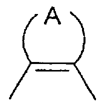 einen fünf- oder sechsgliedrigen heteroaromatischen Ring oder Benzolring bildet, der gegebenenfalls mit Substituenten ausgewählt aus der Gruppe bestehend aus Alkyl, Alkenyl, Alkinyl, Aryl, Heteroaryl, Alkyloxy, Aryloxy, Alkylthio, Arylthio, Alkylcarbonyl, Arylcarbonyl, Carboxyl, Alkyloxycarbonyl, Aryloxycarbonyl, Hydroxysulfonyl, Alkyloxysulfonyl, Aryloxysulfonyl, Halogen, CN, CHO, NO₂ und NO substituiert ist.

3. Verfahren nach Anspruch 1, **dadurch gekennzeichnet, dass** in Formel I die Variablen die folgende Bedeutung aufweisen:
n 2 oder 3;
M für n gleich 2: Pd oder Pt jeweils in der formalen Oxidationsstufe +II;
für n gleich 3: Rh oder Ir jeweils in der formalen Oxidationsstufe +III;
Do Donoratom N;
r gleich 1;
Y¹, Y² jeweils unabhängig voneinander Wasserstoff oder Alkyl
oder
Y¹ und Y² bilden zusammen mit den Kohlenstoffatomen, an welche sie gebunden sind, einen Benzolring;
Y³ Alkyl oder Aryl;
A eine Brücke mit vier Atomen, wovon ein Atom ein Heteroatom sein kann und die restlichen Atome Kohlenstoffatome sind, so dass die Gruppe 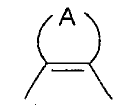 einen sechsgliedrigen heteroaromatischen Ring oder Benzolring bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

4. Verfahren nach Anspruch 1, **dadurch gekennzeichnet, dass** in Formel I die Variablen die folgende Bedeutung aufweisen:
n 2 oder 3;
M für n gleich 2: Pd oder Pt jeweils in der formalen Oxidationsstufe +II;
für n gleich 3: Rh oder Ir jeweils in der formalen Oxidationsstufe +III:
Do Donoratom N;
r gleich 1;
Y¹, Y² jeweils Wasserstoff
oder
Y¹ und Y² bilden zusammen mit den Kohlenstoffatomen, an welche sie gebunden sind, einen Benzolring;
Y3 Alkyl oder Aryl;
A eine Brücke mit vier Atomen, wovon ein Atom ein Stickstoffatom sein kann und die restlichen Atome Kohlenstoffatome sind, so dass die Gruppe 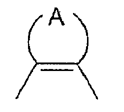 einen Pyridin- oder Benzolring bildet, der gegebenenfalls mit Substituenten ausgewählt aus der Gruppe bestehend aus Alkyl, Alkyloxy, Aryl, Aryloxy, Alkylcarbonyl, Arylcarbonyl, Alkyloxycarbonyl, Aryloxycarbonyl, Halogen und CN substituiert ist.

5. Verfahren nach einem oder mehreren der Ansprüche 1 bis 4, **dadurch gekennzeichnet, dass** das Lösungsmittel oder Lösungsmittelgemisch aus einer oder mehreren Verbindungen besteht, welche ausgewählt sind aus der Gruppe bestehend aus Wasser, C₁-C₄-Alkanolen, symmetrischen und unsymmetrischen Di(C₁-C₄)-alkylethern, symmetrischen und unsymmetrischen Di(C₁-C₄)-alkylketonen, teilweise halogenierten C₁-C₄-Alkanen, perhalogenierten C₁-C₄-Alkanen, teilweise halogenierten C₂-C₄-Alkenen, perhalogenierten C₂-C₄-Alkenen, fünf- und sechsgliedrigen gesättigten cyclischen Ethern mit einem Sauerstoffatom, sechsgliedrigen gesättigten cyclischen Ethern mit zwei nicht benachbarten Sauerstoffatomen, N-C₁-C₄-Alkylformamiden, N,N-Di(C₁-C₄-Alkyl)formamiden, N-C₁-C₄-Alkylacetamiden, N,N-Di(C₁-C₄-Alkyl)acetamiden, fünf-, sechs- und siebengliedrigen gesättigten Lactonen, fünf-, sechs- und siebengliedrigen gesättigten Lactamen, C₁-C₄-Alkanoyl-C₁-C₄-Alkylestern, symmetrischen und unsymmetrischen Di(C₁-C₄)-alkylsulfoxiden, Nitrilen von C₂-C₄-Carbonsäuren, Nitrilen von einkernigen aromatischen Carbonsäuren, einkernigen Aromaten und einkernigen Heteroaromaten.

6. Verfahren nach einem oder mehreren der Ansprüche 1 bis 4, **dadurch gekennzeichnet, dass** das Lösungsmittel oder Lösungsmittelgemisch aus einer oder mehreren Verbindungen besteht, welche ausgewählt sind aus der Gruppe bestehend aus Wasser, C₁-C₄-Alkanolen, symmetrischen und unsymmetrischen Di(C₁-C₄)-alkylketonen, teilweise halogenierten C₁-C₄-Alkanen, Tetrahydrofuran, Dioxan, N,N-Dimethylformamid, N,N-Dimethylacetamid, γ-Butyrolacton, N-Methylpyrrolidinon, Ameisensäure-C₁-C₄-Alkylestern, Essigsäure-C₁-C₄-Alkylestern, Dimethylsulfoxid, Butylmethylsulfoxid, Acetonitril, Propionitril, Benzonitril, Picolinsäure-, Nicotionsäure- und Isonicotionsäurenitril, Benzol, Toluol, o-, m- und p-Xylol, Pyridin und 2-, 3- und 4-Methylpyridin.

7. Verfahren nach einem oder mehreren der Ansprüche 1 bis 6, **dadurch gekennzeichnet, dass** die Brönsted-Säure oder das Gemisch von Brönsted-Säuren aus einer oder mehreren Verbindungen besteht, welche ausgewählt sind aus der Gruppe bestehend aus Halogenwasserstoff, wasserfreien anorganischen Säuren, wasserfreien Carbonsäuren, wasserfreien aliphatischen und aromatischen Sulfonsäuren und wasserfreien teilweise und vollständig fluorierten aliphatischen und aromatischen Sulfonsäuren.

8. Verfahren nach einem oder mehreren der Ansprüche 1 bis 6, **dadurch gekennzeichnet, dass** die Brönsted-Säure oder das Gemisch von Brönsted-Säuren aus einer oder mehreren Verbindungen besteht, welche ausgewählt sind aus der Gruppe bestehend aus Chlorwasserstoff, Bromwasserstoff, wasserfreier Schwefelsäure, wasserfreier Ameisensäure, wasserfreier Methansulfonsäure, wasserfreier Trifluormethansulfonsäure, wasserfreier Trifluoressigsäure und wasserfreier Essigsäure.

9. Verfahren nach einem oder mehreren der Ansprüche 1 bis 8, **dadurch gekennzeichnet, dass** man die Brönsted-Säure oder das Gemisch von Brönsted-Säuren in einer Gesamtkonzentration von 10⁻⁷ bis 1 mol/l, vorzugsweise 10⁻⁵ bis 10⁻¹ mol/l, im Lösungsmittel oder Lösungsmittelgemisch verwendet.

## Claims

1. A process for converting an isomerically pure compound C¹ of the formula I 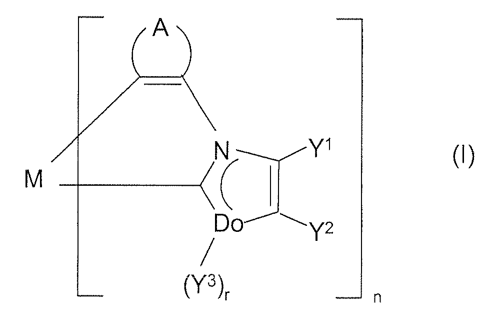 or a mixture M¹ comprising C¹ into an isomeric compound C² of the formula I which is different from
C¹ or a mixture M² comprising C², where the variables have the following meanings:
n is 2 or 3;
M is Pd or Pt, in each case in the formal oxidation state +II, when n is 2;
and is Ru, Os, Co, Rh or Ir, in each case in the formal oxidation state +III, when n is 3;
Do is a donor atom selected from the group consisting of N, O, S and P;
r is 1 when Do is N or P, and is 0 when Do is O or S;
Y¹, Y² are each, independently of one another, hydrogen, alkyl, alkenyl, alkynyl, aryl, heteroaryl, alkyloxy, aryloxy, alkylthio, arylthio, alkylcarbonyl, arylcarbonyl, carboxyl, alkyloxycarbonyl, aryloxycarbonyl, hydroxysulfonyl, alkyloxysulfonyl, aryloxysulfonyl, halogen, CN, CHO, NO₂ or NO,
or
Y¹ and Y² together with the carbon atoms to which they are bound form a six-membered aromatic ring which may comprise one or two nitrogen atoms and may optionally be fused with a further, optionally fused and optionally heteroatom-comprising ring;
Y³ is alkyl, alkenyl , alkynyl, aryl or heteroaryl;
A is a bridge having three or four atoms of which one or two atoms may be heteroatoms and the remaining atoms are carbon atoms, so that the group 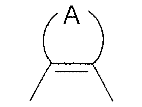 forms a five- or six-membered heteroaromatic ring or benzene ring which may optionally be substituted by substituents selected from the group consisting of alkyl, alkenyl, alkynyl, aryl, heteroaryl, alkyloxy, aryloxy, alkylthio, arylthio, alkylcarbonyl, arylcarbonyl, carboxyl, alkyloxycarbonyl, aryloxycarbonyl, hydroxysulfonyl,
alkyloxysulfonyl, aryloxysulfonyl, halogen, CN, CHO, NO₂ and NO and may optionally be fused with a further, optionally heteroatom- comprising ring which may likewise be fused and substituted by substituents selected from the group consisting of alkyl, alkenyl, alkynyl, aryl, heteroaryl, alkyloxy, aryloxy, alkylthio, arylthio, alkylcarbonyl, arylcarbonyl, carboxyl, alkyloxycarbonyl, aryloxycarbonyl, hydroxysulfonyl, alkyloxysulfonyl, aryloxysulfonyl, halogen, CN, CHO, NO₂ and NO;
which comprises allowing a Brönsted acid or a mixture of Brönsted acids to act on C¹ or M¹ in the presence of a solvent or solvent mixture at a temperature of from 0°C to the boiling point of the solvent or the solvent mixture, with the proviso that
a) the formation of C² from C¹ occurs under the conditions of the process
and
b) when both M¹ and M² are mixtures comprising C¹ and C², the respective isomer ratios of C¹ and C² in the mixtures M¹ and M² are different from one another.

2. The process according to claim 1, wherein the variables in formula I have the following meanings:
n is 2 or 3;
M is Pd or Pt, in each case in the formal oxidation state +II, when n is 2; and is Rh or Ir, in each case in the formal oxidation state +III, when n is 3;
Do is a donor atom N;
r is 1;
Y¹, Y² are each, independently of one another, hydrogen or alkyl
or
Y¹ and Y² together with the carbon atoms to which they are bound form a six-membered aromatic ring which may comprise one or two nitrogen atoms;
Y³ is alkyl, aryl or heteroaryl;
A is a bridge having three or four atoms of which one or two atoms may be heteroatoms and the remaining atoms are carbon atoms, so that the group 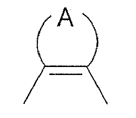 forms a five- or six-membered heteroaromatic ring or benzene ring which may optionally be substituted by substituents selected from the group consisting of alkyl, alkenyl, alkynyl, aryl, heteroaryl, alkyloxy, aryloxy, alkylthio, arylthio, alkylcarbonyl, arylcarbonyl, carboxyl, alkyloxycarbonyl, aryloxycarbonyl, hydroxysulfonyl, alkyloxysulfonyl, aryloxysulfonyl, halogen, CN, CHO, NO₂ and NO.

3. The process according to claim 1, wherein the variables in formula I have the following meanings:
N is 2 or 3;
M is Pd or Pt, in each case in the formal oxidation state +II, when n is 2;
and is Rh or Ir, in each case in the formal oxidation state +III, when n is 3;
Do is a donor atom N;
R is 1;
Y¹, Y² are each, independently of one another, hydrogen or alkyl
or
Y¹ and Y² together with the carbon atoms to which they are bound form a benzene ring;
Y³ is alkyl or aryl;
A is a bridge having four atoms of which one atom may be a heteroatom and the remaining atoms are carbon atoms, so that the group 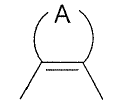 forms a six-membered heteroaromatic ring or benzene ring which may optionally be substituted by substituents selected from the group consisting of alkyl, alkyloxy, aryl, aryloxy, alkylcarbonyl, arylcarbonyl, alkoxycarbonyl, aryloxycarbonyl, halogen and CN.

4. The process according to claim 1, wherein the variables in formula I have the following meanings:
n is 2 or 3;
M is Pd or Pt, in each case in the formal oxidation state +II, when n is 2;
and is Rh or Ir, in each case in the formal oxidation state +III, when n is 3;
Do is a donor atom N;
r is 1;
Y¹, Y² are each hydrogen
or
Y¹ and Y² together with the carbon atoms to which they are bound form a benzene ring;
Y³ is alkyl or aryl;
A is a bridge having four atoms of which one atom may be a nitrogen atom and the remaining atoms are carbon atoms, so that the group 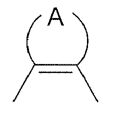 forms a pyridine or benzene ring which may optionally be substituted by substituents selected from the group consisting of alkyl, alkyloxy, aryl, aryloxy, alkylcarbonyl, arylcarbonyl, alkoxycarbonyl, aryloxycarbonyl, halogen and CN.

5. The process according to one or more of claims 1 to 4, wherein the solvent or solvent mixture comprises one or more compounds selected from the group consisting of water, C₁-C₄-alkanols, symmetrical and unsymmetrical di(C₁-C₄)-alkyl ethers, symmetrical and unsymmetrical di(C₁-C₄)-alkyl ketones, partially halogenated C₁-C₄-alkanes, perhalogenated C₁-C₄-alkanes, partially halogenated C₂-C₄-alkenes, perhalogenated C₂-C₄-alkenes, five- and six-membered saturated cyclic ethers having one oxygen atom, six-membered saturated cyclic ethers having two nonadjacent oxygen atoms, N-C₁-C₄-alkylformamides, N,N-di(C₁-C₄-alkyl)formamides, N-C₁-C₄-alkylacetamides, N,N-di(C₁-C₄-alkyl)acetamides, five-, six- and seven-membered saturated lactones, five-, six- and seven-membered saturated lactams, C₁-C₄-alkyl C₁-C₄-alkanoates, symmetrical and unsymmetrical di(C₁-C₄)-alkyl sulfoxides, nitriles of C₂-C₄-carboxylic acids, nitriles of monocyclic aromatic carboxylic acids, monocyclic aromatics and monocyclic heteroaromatics.

6. The process according to one or more of claims 1 to 4, wherein the solvent or solvent mixture comprises one or more compounds selected from the group consisting of water, C₁-C₄-alkanols, symmetrical and unsymmetrical di(C₁-C₄)-alkyl ketones, partially halogenated C₁-C₄-alkanes, tetrahydrofuran, dioxane, N,N-dimethylformamide, N,N-dimethylacetamide, γ-butyrolactone, N-methylpyrrolidinone, C₁-C₄-alkyl formates, C₁-C₄-alkyl acetates, dimethyl sulfoxide, butyl methyl sulfoxide, acetonitrile, propionitrile, benzonitrile, picolinonitrile, nicotinonitrile and isonicotinonitrile, benzene, toluene, o-, m- and p-xylene, pyridine and 2-, 3- and 4-methylpyridine.

7. The process according to one or more of claims 1 to 6, wherein the Brönsted acid or the mixture of Brönsted acids comprises one or more compounds selected from the group consisting of hydrogen halides, water-free inorganic acids, water-free carboxylic acids, water-free aliphatic and aromatic sulfonic acids and water-free partially fluorinated and perfluorinated aliphatic and aromatic sulfonic acids.

8. The process according to one or more of claims 1 to 6, wherein the Brönsted acid or the mixture of Brönsted acids comprises one or more compounds selected from the group consisting of hydrogen chloride, hydrogen bromide, water-free sulfuric acid, water-free formic acid, water-free methanesulfonic acid, water-free trifluoromethanesulfonic acid, water-free trifluoroacetic acid and water-free acetic acid.

9. The process according to one or more of claims 1 to 8, wherein the Brönsted acid or the mixture of Brönsted acids is used in a total concentration of from 10⁻⁷ to 1 mol/l, preferably from 10⁻⁵ to 10⁻¹ mol/l, in the solvent or solvent mixture.

## Revendications

1. Procédé de conversion d'un composé isomériquement pur V¹ de formule I 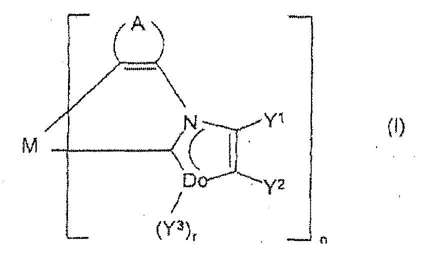 ou d'un mélange M¹, qui contient V¹, en un composé isomère V² de formule I différent de V¹ ou un mélange M² , qui contient V² les variables ayant les significations suivantes :
n 2 ou 3 ;
M pour n égal 2 : Pd ou Pt, à chaque fois au degré d'oxydation formel +TI ; pour n égal 3 : Ru, Os, Co, Rh ou Ir, à chaque fois au degré d'oxydation formel +III ;
Do atome donneur choisi dans le groupe constitué par N, O, S et P ;
r égal à 1 lorsque Do est N ou P, et 0 lorsque Do est O ou S ;
Y¹, Y² à chaque fois indépendamment l'un de l'autre, hydrogène, alkyle, alcényle, alcynyle, aryle, hétéroaryle, alkyloxy, aryloxy, alkylthio, arylthio, alkylcarbonyle, arylcarbonyle, carboxyle, alkyloxycarbonyle, aryloxycarbonyle, hydroxysulfonyle, alkyloxysulfonyle, aryloxysulfonyle, halogène, CN, CHO, NO₂ ou NO,
ou
Y¹ et Y² forment ensemble avec les atomes de carbone auxquels ils sont reliés, un cycle aromatique à six éléments, qui peut contenir un
ou deux atomes d'azote et qui est éventuellement condensé avec un cycle supplémentaire, éventuellement condensé et contenant éventuellement des hétéroatomes ;
Y³ alkyle, alcényle, alcynyle, aryle ou hétéroaryle ;
A un pont contenant trois ou quatre atomes, parmi lesquels un ou deux atomes peuvent être des hétéroatomes et les atomes restants sont des atomes de carbone, de manière à ce que le groupe 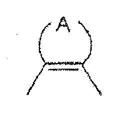 forme un cycle hétéroaromatique à cinq ou six éléments ou un cycle benzène, qui est éventuellement substitué avec des substituants choisis dans le groupe constitué par alkyle, alcényle, alcynyle, aryle, hétéroaryle, alkyloxy, aryloxy, alkylthio, arylthio, alkylcarbonyle, arylcarbonyle, carboxyle, alkyloxycarbonyle, aryloxycarbonyle, hydroxysulfonyle, alkyloxysulfonyle, aryloxysulfonyle, halogène, CN, CHO, NO₂ et NO, et éventuellement condensé avec un cycle supplémentaire contenant éventuellement des hétéroatomes, qui peut également être condensé et substitué avec des substituants choisis dans le groupe constitué par alkyle, alcényle, alcynyle, aryle, hétéroaryle, alkyloxy, aryloxy, alkylthio, arylthio, alkylcarbonyle, arylcarbonyle, carboxyle, alkyloxycarbonyle, aryloxycarbonyle, hydroxysulfonyle, alkyloxysulfonyle, aryloxysulfonyle, halogène, CN, CHO, NO₂ et NO ;
**caractérisé en ce qu'**un acide de Brönsted ou un mélange d'acides de Brônsted est laissé agir sur V¹ ou M¹ en présence d'un solvant ou d'un mélange de solvants à une température de 0 °C jusqu'au point d'ébullition du solvant ou du mélange de solvants, à condition que
a) la formation de V² à partir de V¹ ait lieu dans les conditions du procédé
et
b) dans le cas où aussi bien M¹ que M² représentent des mélanges qui contiennent V¹ et V² les rapports isomériques respectifs de V¹ et V² dans les mélanges M¹ et M² sont différents l'un de l'autre.

2. Procédé selon la revendication 1, **caractérisé en ce que** les variables de la formule I ont la signification suivante :
n 2 ou 3 ;
M pour n égal 2 : Pd ou Pt, à chaque fois au degré d'oxydation formel +II ; pour n égal 3 : Rh ou Ir, à chaque fois au degré d'oxydation formel +III ;
Do atome donneur N ;
r égal à 1 ;
Y¹, Y² à chaque fois indépendamment l'un de l'autre, hydrogène ou alkyle
ou
Y¹ et Y² forment ensemble avec les atomes de carbone auxquels ils sont reliés, un cycle aromatique à six éléments, qui peut contenir un
ou deux atomes d'azote ;
Y³ alkyle, aryle ou hétéroaryle ;
A un pont contenant trois ou quatre atome, parmi lesquels un ou deux atomes peuvent être des hétéroatomes et les atomes restants sont des atomes de carbone, de manière à ce que le groupe 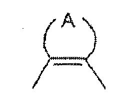
forme un cycle hétéroaromatique à cinq ou six éléments ou un cycle benzène, qui est éventuellement substitué avec des substituants choisis dans le groupe constitué par alkyle, alcényle, alcynyle, aryle, hétéroaryle, alkyloxy, aryloxy, alkylthio, arylthio, alkylcarbonyle, arylcarbonyle, carboxyle, alkyloxycarbonyle, aryloxycarbonyle, hydroxysulfonyle, alkyloxysulfonyle, aryloxysulfonyle, halogène, CN, CHO, NO₂ et NO.

3. Procédé selon la revendication 1, **caractérisé en ce que** les variables de la formule I ont la signification suivante :
n 2 ou 3 ;
M pour n égal 2 : Pd ou Pt, à chaque fois au degré d'oxydation formel +II ; pour n égal 3 : Rh ou Ir, à chaque fois au degré d'oxydation formel +III ;
Do atome donneur N ;
r égal à 1 ;
Y¹, Y² à chaque fois indépendamment l'un de l'autre, hydrogène ou alkyle
ou
Y¹ et Y² forment ensemble avec les atomes de carbone auxquels ils sont reliés, un cycle benzène ;
Y³ alkyle ou aryle ;
A un pont contenant quatre atomes, parmi lesquels un atome peut être un hétéroatome et les atomes restants sont des atomes de carbone, de manière à ce que le groupe 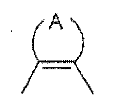
forme un cycle hétéroaromatique à six éléments
ou un cycle benzène, qui est éventuellement substitué avec des substituants choisis dans le groupe constitué par alkyle, alkyloxy, aryle, aryloxy, alkylcarbonyle, arylcarbonyle, alkyloxycarbonyle, aryloxycarbonyle, halogène et CN.

4. Procédé selon la revendication 1, **caractérisé en ce que** les variables de la formule I ont la signification suivants :
n 2 ou 3 ;
M pour n égal 2 : Pd ou Pt, à chaque fois au degré d'oxydation formel +II ; pour n égal 3 : Rh ou Ir, à chaque fois au degré d'oxydation formel +III ;
Do atome donneur N ;
r égal à 1 ;
Y¹, Y² à chaque fois hydrogène
ou
Y¹ et Y² forment ensemble avec les atomes de carbone auxquels ils sont reliés, un cycle benzène ;
Y³ alkyle ou aryle ;
A un pont contenant quatre atomes, parmi lesquels un atome peut être un atome d'azote et les atomes restants sont des atomes de carbone, de manière à ce que le groupe 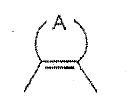 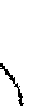 forme un cycle pyridine ou benzène, qui est éventuellement substitué avec des substituants choisis dans le groupe constitué par alkyle, alkyloxy, aryle, aryloxy, alkylcarbonyle, arylcarbonyle, alkyloxycarbonyle, aryloxycarbonyle, halogène et CN.

5. Procédé selon une ou plusieurs des revendications 1 à 4, **caractérisé en ce que** le solvant
ou le mélange de solvants est constitué d'un ou de plusieurs composés qui sont choisis dans le groupe constitué par l'eau, les alcanols en C₁-C₄, les di(C₁-C₄)-alkyléthers asymétriques et asymétriques, les di (C₁-C₄)-alkylcétones symétriques et asymétriques, les alcanes en C₁-C₄ partiellement halogénés, les alcanes en C₁-C₄ perhalogénés, les alcènes en C₂-C₄ partiellement halogénés, les alcènes en C₂-C₄ perhalogénés, les éthers cycliques saturés à cinq et six éléments contenant un atome d'oxygène, les éthers cycliques saturés à six éléments contenant deux atomes d'oxygène non adjacents, les N-C₁-C₄-alkylformamides, les N,N-di(C₁-C₄-alkyl)fornamides, les N-C₁-C₄-alkyl-acétamides, les N,N-di- (C₁-C₄-alkyl) acétamides, les lactones saturées à cinq, six et sept éléments, les lactames saturés à cinq, six et sept éléments, les C₁-C₄-alcanoyl-C₁-C₄-alkylesters, les di(C₁-C₄)-alkylsulfoxydes symétriques et asymétriques, les nitriles d'acides carboxyliques en C₂-C₄, les nitriles d'acides carboxyliques aromatiques mononucléaires, les composés aromatiques mononucléaires et les composés hétéroaromatiques mononucléaires.

6. Procédé selon une ou plusieurs des revendications 1 à 4, **caractérisé en ce que** le solvant
ou le mélange de solvants est constitué d'un ou de plusieurs composés qui sont choisis dans le groupe constitué par l'eau, les alcanols en C₁-C₄, les di (C₁-C₄)-alkyloétones symétriques et asymétriques, les alcanes en C₁-C₄ partiellement halogénés, le tétrahydrofurane, le dioxane, le N,N-diméthylformamide, le N,N-diméthylacétamide, la γ-butyrolactone, la N-méthylpyrrolidinone, les esters alkyliques en C₁-C₄ de l'acide formique, les esters alkyliques en C₁-C₄ de l'acide acétique, le diméthylsulfoxyde, le butylméthylsulfoxyde, l'acétonitrile, le propionitrile, le benzanitrile, le nitrile de l'acide picolique, de l'acide nicotinique et de l'acide isonicotinique, le benzène, le toluène, le o-, m- et p-xylène, la pyridine et la 2-, 3- et 4-méthylpyridine.

7. Procédé selon une ou plusieurs des revendications 1 à 6, **caractérisé en ce que** l'acide de Brönsted ou le mélange d'acides de Brönsted est constitué d'un ou de plusieurs composés qui sont choisis dans le groupe constitué par les halogénures d'hydrogène, les acides inorganiques anhydres, les acides carboxyliques anhydres, les acides sulfoniques aliphatiques et aromatiques anhydres et les acides sulfoniques aliphatiques et aromatiques partiellement et totalement fluorés anhydres.

8. Procédé selon une ou plusieurs des revendication 1 à 6, **caractérisé en ce que** l'acide de Brönsted ou le mélange d'acides de Brönsted est constitué d'un ou de plusieurs composés qui sont choisis dans le groupe constitué par le chlorure d'hydrogène, le bromure d'hydrogène, l'acide sulfurique anhydre, l'acide formique anhydre, l'acide méthanesulfonique anhydre, l'acide trifluorométhanesulfonique anhydre, l'acide trifluoroacétique anhydre et l'acide acétique anhydre.

9. Procédé selon une ou plusieurs des revendications 1 à 8, **caractérisé en ce que** l'acide de Brönsted ou le mélange d'acides de Brönsted est utilisé en une concentration totale de 10⁻⁷ à 1 mol/l, avantageusement de 10⁻⁵ à 10⁻¹ mol/l, dans le solvant ou le mélange de solvants.
